# EUROPEAN PATENT SPECIFICATION

(11) **EP 3 882 117 B1**
(45) Date of publication and mention of the grant of the patent: **30.08.2023**
(21) Application number: 19885001.8
(22) Date of filing: 11.11.2019
(51) Int. Cl.: B62K 25/20, B62K 11/10

(54) **SADDLE-RIDDEN VEHICLE**
SATTELFAHRZEUG
VÉHICULE À SELLE

(30) Priority: 12.11.2018 JP 2018212476
(43) Date of publication of application: 22.09.2021
(73) Proprietor: Yamaha Hatsudoki Kabushiki Kaisha, Iwata-shi, Shizuoka 438-8501 (JP)
(72) Inventor: SAITO Yusuke, Iwata-shi, Shizuoka 438-8501 (JP)
(74) Representative: Grünecker Patent- und Rechtsanwälte PartG mbB
(86) International application number: PCT/JP2019/044155
(87) International publication number: WO 2020/100819

(56) References cited:
- EP-A1- 0 726 197
- WO-A1-2018/180419
- CN-A- 106 976 518
- JP-A- H11 255 173
- JP-A- 2002 053 087
- JP-A- 2002 225 688
- JP-A- 2009 132 356
- JP-A- 2013 113 341

## Description

The present invention relates to a saddled vehicle. Prior art document JP 2017-149165 A discloses a scooter-type motorcycle representing an example of a saddled vehicle. In the market of saddled vehicles like the one described above, as preferences and life styles of the users are diversified, demands of users for designs, materials and the like of saddled vehicles are also diversified.

Prior art document CN 106 976 518 A discloses several configurations of a saddled vehicle. The figures of one specific configuration illustrates a saddled vehicle with a body frame, a rear wheel, a swing unit supporting an engine configured to generate power for rotating the rear wheel, a transmission mechanism configured to transmit the power to the rear wheel. An anti-vibration link is coupled to the body frame so as to be pivotable about a first pivot axis, and coupled to the swing unit so as to be pivotable about a second pivot axis, thereby enabling the swing unit to swing in an up-down direction of the body frame. A rear suspension includes an upper coupling portion coupled to the body frame, a lower coupling portion coupled to the swing unit, and a shock absorber configured to exhibit a telescopic action along a telescopic axis to enable damping of a displacement of the rear wheel in the up-down direction of the body frame. The transmission mechanism is disposed in one side of the rear wheel in a left-right direction of the body frame, and the rear suspension is disposed in the other side of the rear wheel in the left-right direction of the body frame. When viewed from the left-right direction of the body frame, an intersecting point between the telescopic axis of the rear suspension and a straight line extending through the first pivot axis and the second pivot axis of the anti-vibration link is situated behind the front end of the rear wheel in the front-rear direction of the body frame and ahead of a rear end of the rear wheel in the front-rear direction of the body frame. The telescopic axis of the rear suspension is inclined forwards and the telescopic axis of the rear suspension intersects a road surface at an intersection point, the intersection point is situated behind the front end of the rear wheel and ahead of the rear end of the rear wheel when viewed from the left-right direction of the body frame. An outer tire diameter of the rear wheel is defined as a distance between an intersection point and an intersection point in the front-rear direction of the body frame. The intersection point is an intersection point between a vertical line that passes through the front end of the rear wheel and the horizontal road surface when viewed from the left-right direction of the body frame. The intersection point is an intersection point between a vertical line that passes through the rear end of the rear wheel and the horizontal road surface when viewed from the left-right direction of the body frame.

The figures of another specific configuration illustrates a saddled vehicle with a body frame, a rear wheel, a swing unit supporting an engine configured to generate power for rotating the rear wheel, a transmission mechanism configured to transmit the power to the rear wheel. An anti-vibration link is coupled to the body frame so as to be pivotable about a first pivot axis, and coupled to the swing unit so as to be pivotable about a second pivot axis, thereby enabling the swing unit to swing in an up-down direction of the body frame. A rear suspension includes an upper coupling portion coupled to the body frame, a lower coupling portion coupled to the swing unit, and a shock absorber configured to exhibit a telescopic action along a telescopic axis to enable damping of a displacement of the rear wheel in the up-down direction of the body frame. The transmission mechanism is disposed in one side of the rear wheel in a left-right direction of the body frame, and the rear suspension is disposed in the other side of the rear wheel in the left-right direction of the body frame. The upper coupling portion of the rear suspension is disposed ahead of a front end of the rear wheel in a front-rear direction of the body frame when viewed from the left-right direction of the body frame. When viewed from the left-right direction of the body frame, an intersecting point between the telescopic axis of the rear suspension and a straight line extending through the first pivot axis and the second pivot axis of the anti-vibration link is situated behind the front end of the rear wheel in the front-rear direction of the body frame. The telescopic axis of the rear suspension is inclined forwards and the telescopic axis of the rear suspension intersects a road surface at an intersection point, the intersection point is situated behind the front end of the rear wheel. An outer tire diameter of the rear wheel is defined as a distance between an intersection point and an intersection point in the front-rear direction of the body frame. The intersection point is an intersection point between a vertical line that passes through the front end of the rear wheel and the horizontal road surface when viewed from the left-right direction of the body frame. The intersection point is an intersection point between a vertical line that passes through the rear end of the rear wheel and the horizontal road surface when viewed from the left-right direction of the body frame. This document CN 106 976 518 A discloses the features of the preamble of claim 1.

An object of the invention is to provide a saddled vehicle that is flexible enough to meet the diversified demands from the market without deteriorating the traveling performance thereof. According to the present invention said object is solved by saddled vehicle having the features of independent claim 1. Preferred embodiments are laid down in the dependent claims.

In order to achieve the above object, an illustrative aspect provides a saddled vehicle, comprising:
a body frame;
a rear wheel;
a swing unit supporting an engine configured to generate power for rotating the rear wheel, a transmission mechanism configured to transmit the power to the rear wheel, and the rear wheel;
an anti-vibration link coupled to the body frame so as to be pivotable about a first pivot axis, and coupled to the swing unit so as to be pivotable about a second pivot axis, thereby enabling the swing unit to swing in an up-down direction of the body frame; and
a rear suspension including an upper coupling portion coupled to the body frame, a lower coupling portion coupled to the swing unit, and a shock absorber configured to exhibit a telescopic action along a telescopic axis to enable damping of a displacement of the rear wheel in the up-down direction of the body frame,
wherein the transmission mechanism is disposed in one side of the rear wheel in a left-right direction of the body frame, and the rear suspension is disposed in the other side of the rear wheel in the left-right direction of the body frame;
wherein one of plural types of tires having different outer tire diameters can be selectively attached to the swing unit as the rear wheel;
wherein the upper coupling portion of the rear suspension is disposed ahead of a front end of the rear wheel in a front-rear direction of the body frame when viewed from the left-right direction of the body frame, irrespective of an outer tire diameter of the rear wheel allowed to be attached to the swing unit; and
wherein when viewed from the left-right direction of the body frame, an intersecting point between the telescopic axis of the rear suspension and a straight line extending through the first pivot axis and the second pivot axis of the anti-vibration link is situated behind the front end of the rear wheel in the front-rear direction of the body frame and ahead of a rear end of the rear wheel in the front-rear direction of the body frame, irrespective of the outer tire diameter of the rear wheel allowed to be attached to the swing unit.

The outer tire diameter of the rear wheel may be exemplified as one of design factors of the saddled vehicles that can be changed based on various demands from the market. For example, a smaller outer tire diameter can provide a smaller turning radius, whereas a greater outer tire diameter can improve the high-speed traveling performance. In general, in a saddled vehicle, dimensions of a body frame, a swing unit, an anti-vibration link, a rear suspension, and the like and positional relationships therebetween are designed based on an outer tire diameter of a rear wheel determined in advance so as to obtain a desired traveling performance. In other words, if only the outer tire diameter of the rear tire attached on the saddled vehicle so designed is changed, it could be difficult to cause the anti-vibration link and the rear suspension to exhibit the originally designed performances for obtaining the desired traveling performance. Consequently, there would be a case where the anti-vibration link and the rear suspension need to be replaced with those matching an outer tire diameter resulting from the change.

Specifically, the anti-vibration link absorbs a vibration component caused by the engine by pivoting around a pivot axis thereof to thereby prevent the transmission of the vibration component to the body frame. When the outer tire diameters of the rear wheels are changed as described above, there may occur a case where the anti-vibration link is restrained from pivoting due to the change in positional relationships between the components. In such a situation, a vibration component which shall originally be absorbed is transmitted to the pivot axis, thereby resulting in a possibility that a horizontal reaction force acts on the pivot axis. As a result, the vibration component transmitted to the body frame would affect the riding comfort of the saddled vehicle. In other words, the desired traveling performance would be deteriorated.

The inventor conceived to enable various types of rear wheels having different outer tire diameters to be attached on a common assembly including at least the body frame, the swing unit, the anti-vibration link, and the rear suspension in order to meet various demands from the markets. Further, the inventor studied requirements of such a common assembly, on which a plurality of types of rear wheels having different outer tire diameters can be attached, capable of suppressing the deterioration of the traveling performance irrespective of the outer tire diameters.

An angle formed between the up-down direction of the body frame and the straight line extending through the first pivot axis and the second pivot axis of the anti-vibration link when viewed from the left-right direction of the body frame affects the magnitude of an allowable propelling force with which the vibration isolating function of the anti-vibration link can work normally against a propelling force of the rear wheel that mainly acts on the anti-vibration link. On the other hand, an angle formed between the up-down direction of the body frame and the telescopic axis of the rear suspension when viewed from the left-right direction of the body frame affects the impact damping capability of the rear suspension as well as the magnitude of a force directed along the up-down direction of the body frame and acting on the rear wheel thereby causing the anti-vibration link to pivot about each of the first pivot axis and the second pivot axis. The inventor noted the fact that the above two angles greatly affect the traveling performance of the saddled vehicle in particular. Further, the inventor found out the requirements of such a common assembly that is capable of suppressing the deterioration of the traveling performance while allowing the attachment of plural types of rear wheels having different outer tire diameters include determination of the above two angles in such a manner that the intersection point between the straight line and the telescopic axis meets the positional conditions or relationships described above irrespective of the outer tire diameters of the rear wheels that are allowed to be attached on the common assembly.

Consequently, with the configuration that has been described heretofore, it is possible to provide the saddled vehicle that can meet flexibly various demands from the markets without deteriorating the traveling performance thereof by changing the outer tire diameters R1 of the rear wheels that are attached on the common assembly without changing the components attached thereon.

The inventor further studied about the requirements that are to be met by the common assembly capable of suppressing the deterioration of the traveling performance thereof while allowing the attachment of the plural types of rear wheels having different outer tire diameters R1, and found out that it is preferable that the requirements include at least one of the following conditions:
> In a case where a tire having a maximum value of an outer tire diameter as an allowable maximum outer tire diameter is attached to the swing unit as the rear wheel, the intersecting point is situated above a ground contact point of the rear wheel in the up-down direction of the body frame or at a height as same as the ground contact point;
> The first pivot axis and the second pivot axis are situated ahead of the upper coupling portion of the rear suspension in the front-rear direction of the body frame, when viewed from the left-right direction of the body frame;
> An angle formed by the telescopic axis of the rear suspension and a straight line connecting the first pivot axis and the second pivot axis is no less than 20 degrees, when viewed from the left-right direction of the body frame;
> When viewed from the left-right direction of the body frame, a length of a straight line connecting the upper coupling portion and the lower coupling portion is shorter than a length of a straight line connecting the first pivot axis and the upper coupling portion as well as a length of a straight line connecting the first pivot axis and the lower coupling portion;
> When viewed from the left-right direction of the body frame, a length of a straight line connecting the upper coupling portion and the lower coupling portion is shorter than a length of a straight line connecting the second pivot axis and the upper coupling portion as well as a length of a straight line connecting the second pivot axis and the lower coupling portion;
> The lower coupling portion is disposed above a rotation center of the rear wheel in the up-down direction of the body frame, when viewed from the left-right direction of the body frame; and
> The upper coupling portion is disposed behind the second pivot axis in the front-rear direction of the body frame, when viewed from the left-right direction of the body frame.

### Brief Description of Drawings

FIG 1 is a left side view illustrating the saddled vehicle according to an embodiment.
FIG 2 is a left side view illustrating the saddled vehicle with an exterior cover, a seat, and a stowage box removed.
FIG 3 is a plan view illustrating the saddled vehicle with the exterior cover, the seat, and the stowage box removed.
FIG 4 is a right side view illustrating the saddled vehicle with the exterior cover, the seat, and the stowage box removed.
FIG 5 is a section view illustrating an interior of a swing unit.
FIG 6A illustrates an external appearance of an anti-vibration link viewed from below in an up-down direction of a body frame.
FIG 6B illustrates a cross section of the anti-vibration link viewed from a direction indicated by arrows along a line VIB-VIB in FIG 6A.
FIG 6C illustrates a cross section of the anti-vibration link viewed from a direction indicated by arrows along a line VIC-VIC in FIG 6A.

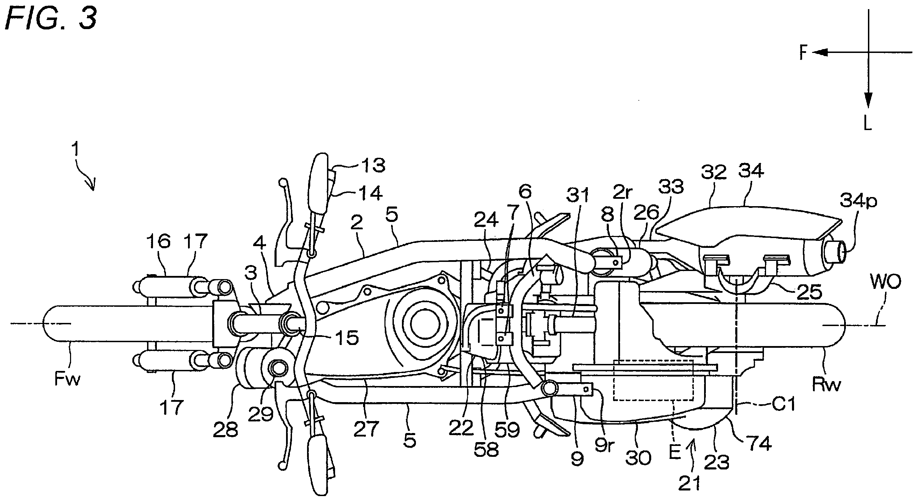

FIG 3B illustrates an exemplary operation of the left front ranging device of FIG 3A.

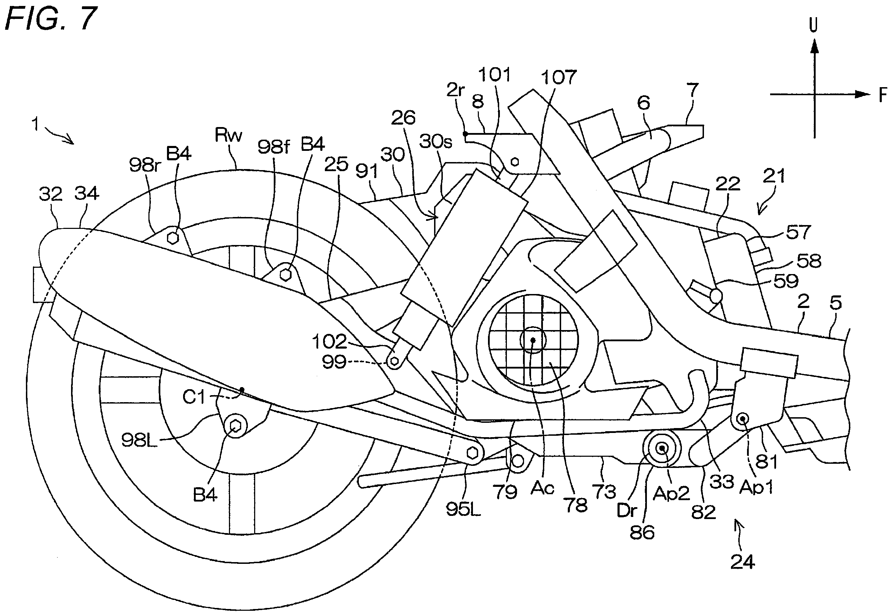

FIG 7 is a right side view illustrating a rear part of the saddled vehicle with the exterior cover, the seat, and the stowage box removed.

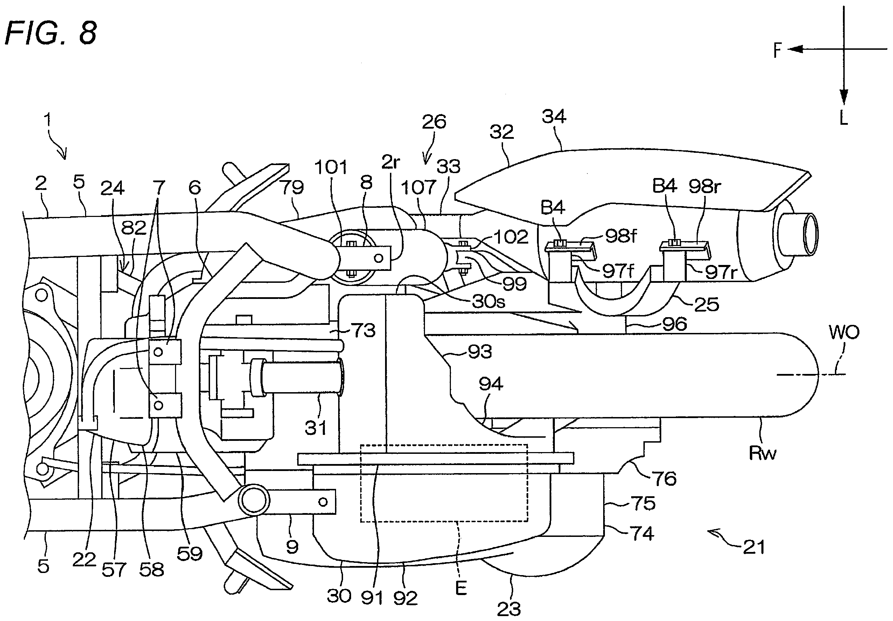

FIG 8 is a plan view illustrating the rear part of the saddled vehicle with the exterior cover, the seat, and the stowage box removed.

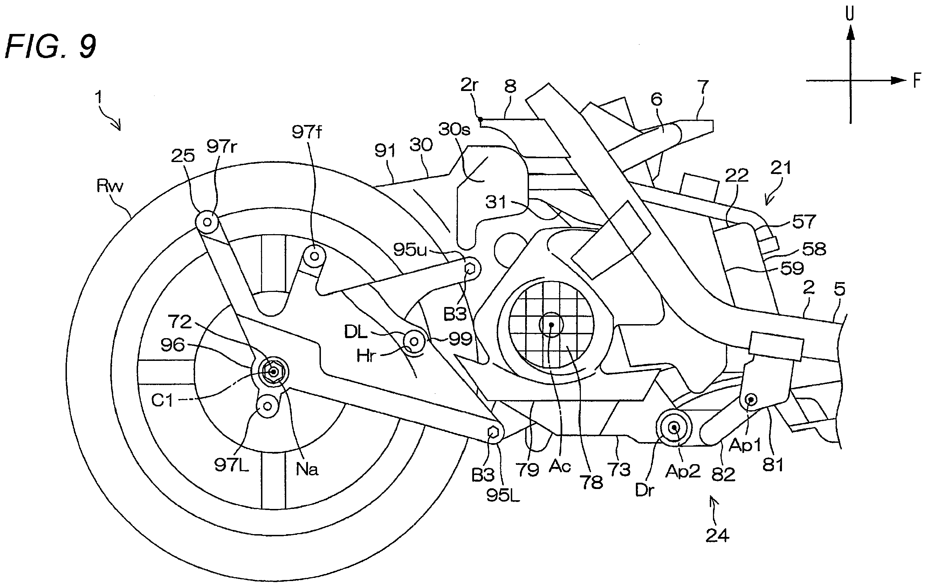

FIG 9 is a right side view illustrating the rear part of the saddled vehicle with a rear suspension and a muffler removed in addition to the exterior cover, the seat, and the stowage box.

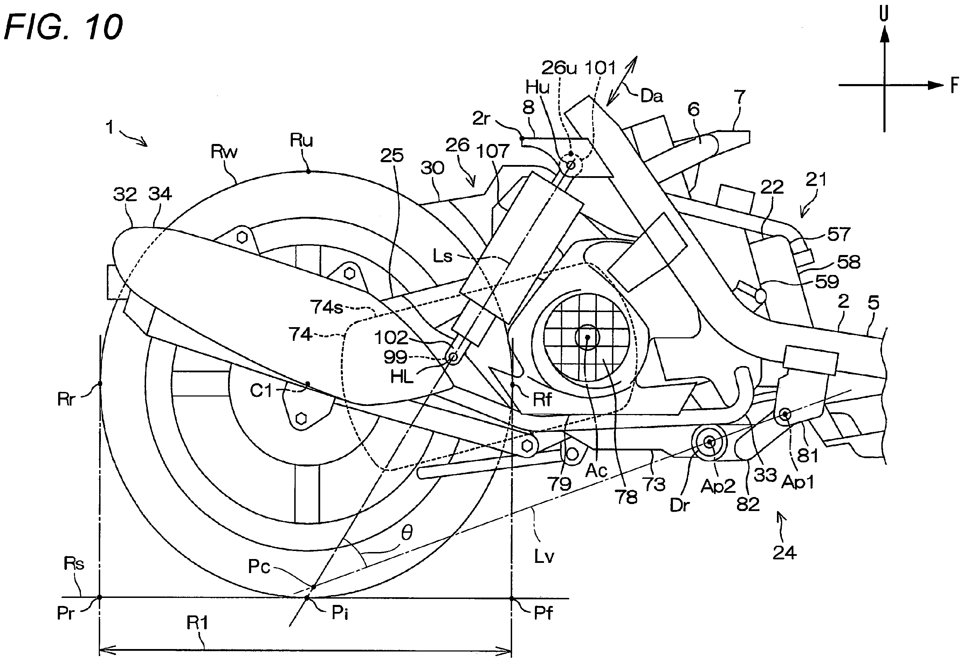

FIG 10 is a right side view illustrating a rear part of the saddled vehicle with the exterior cover, the seat, and the stowage box removed.

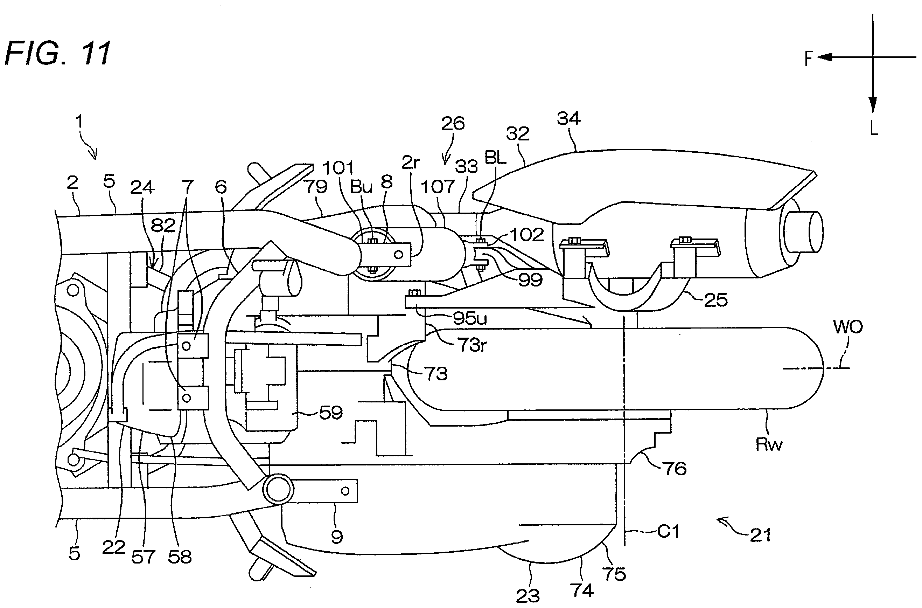

FIG 11 is a right side view illustrating the rear part of the saddled vehicle with an air cleaner box removed in addition to the exterior cover, the seat, and the stowage box.

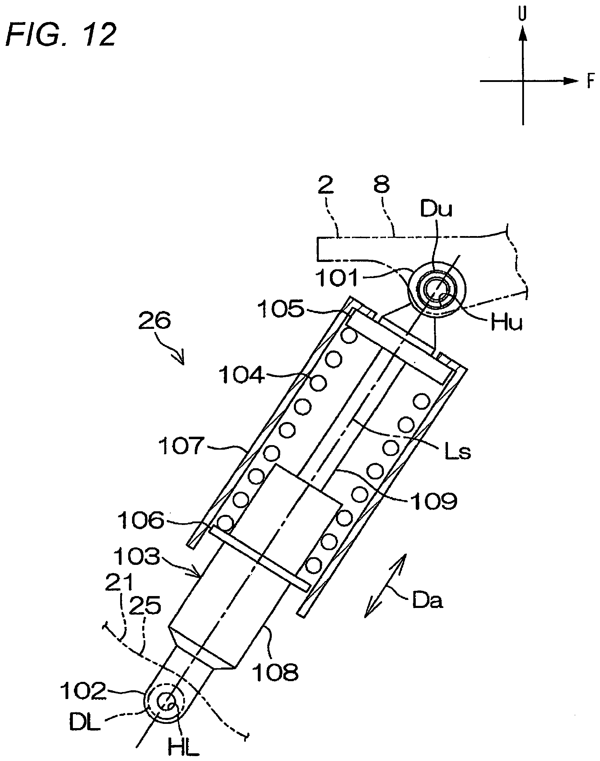

FIG 12 is a section view illustrating an interior of the rear suspension.

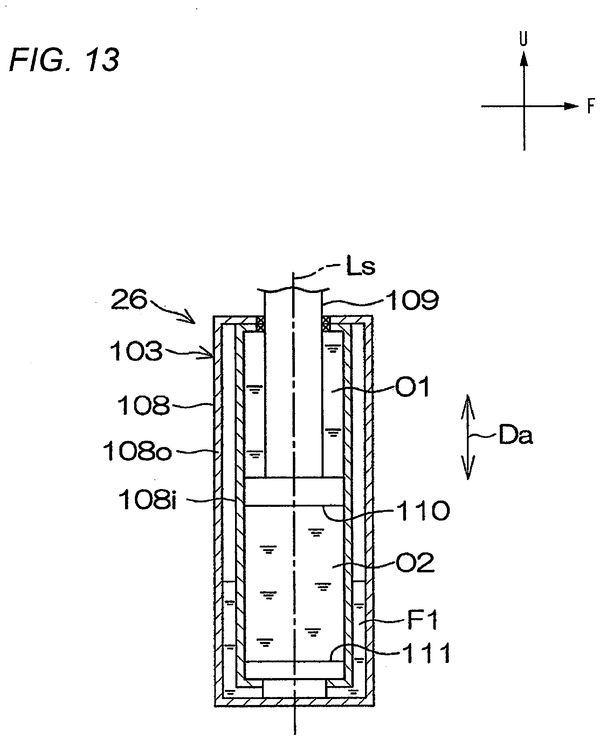

FIG 13 is a section view illustrating an interior of a hydraulic damper provided in the rear suspension.

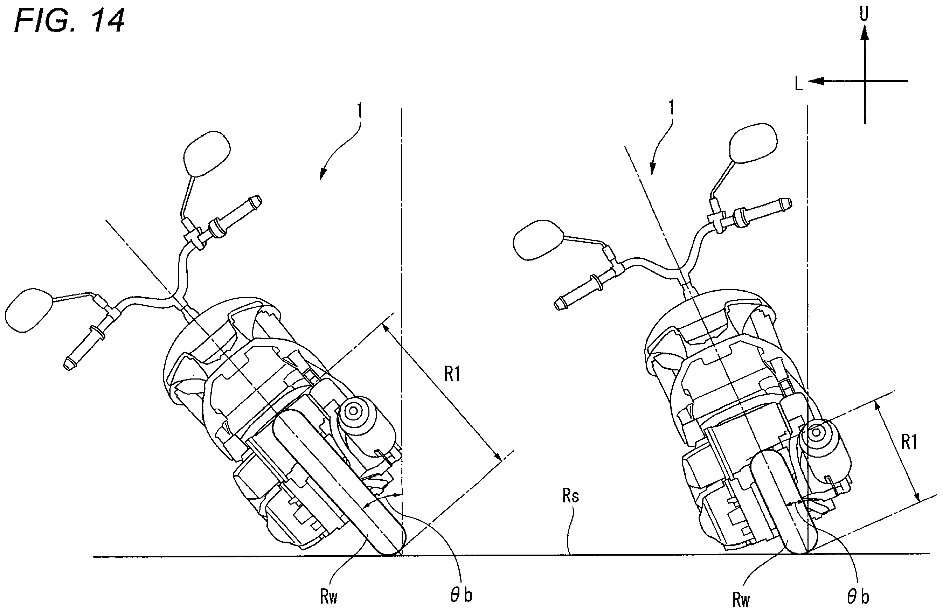

FIG 14 illustrates external appearances of two saddled vehicles, viewed from the rear in the front-rear direction of the body frame, on which rear wheels having different outer tire diameters are attached.

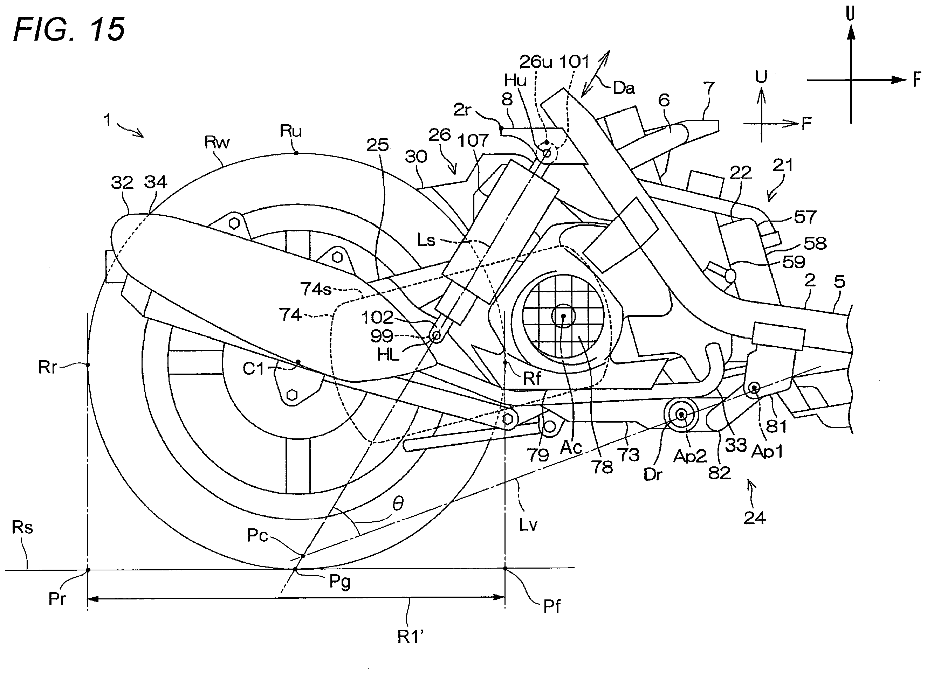

FIG 15 illustrates the saddled vehicle on which a rear whee having an outer tire diameter greater than that of the rear wheel illustrated in FIG 10 is attached.

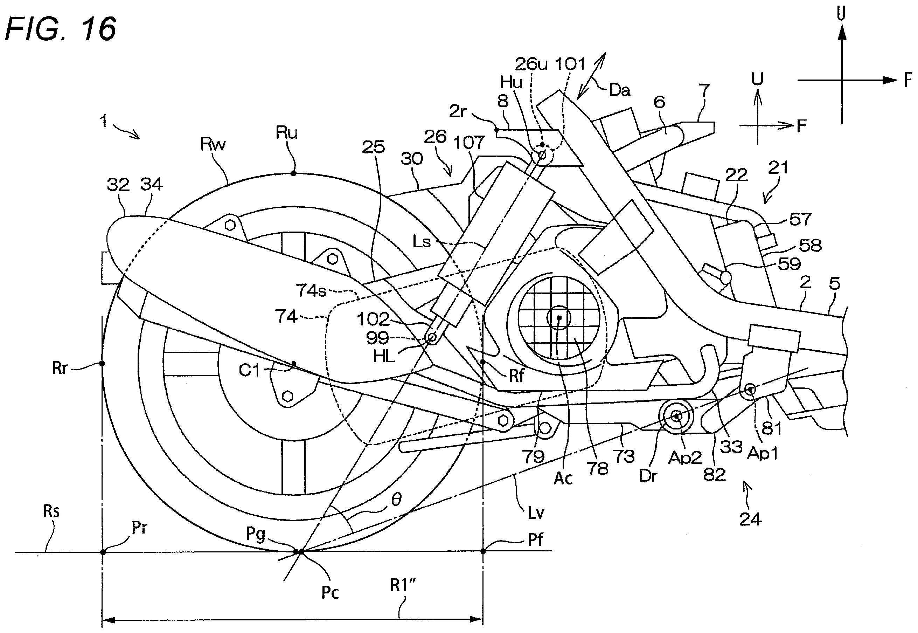

FIG 16 illustrates the saddled vehicle on which a rear wheel having an outer tire diameter smaller than that of the rear wheel illustrated in FIG 10 is attached.

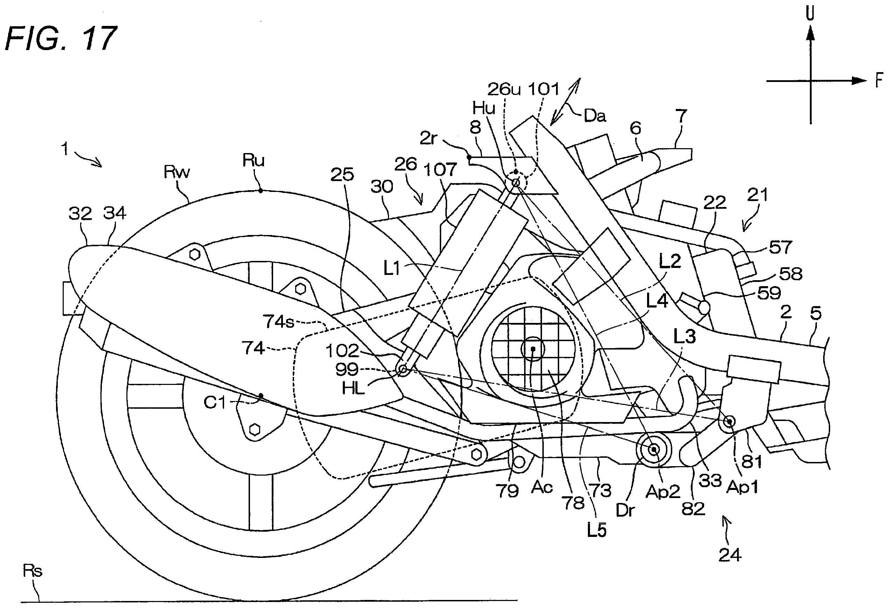

FIG 17 is a right side view illustrating the rear part of the saddled vehicle with the exterior cover, the seat, and the stowage box removed.

### Description of Embodiments

Hereinafter, with reference to the accompanying drawings, examples of an embodiment of the invention will be described below in detail. In the following description, provided that particularly described otherwise, a saddled vehicle 1 will be described as being placed on a horizontal road surface Rs in a reference posture. The reference posture is a posture in which a steering handle 14 is placed in a straight traveling position in which the saddled vehicle 1 is allowed to travel straight ahead (a position of the steering handle 14 illustrated in FIG 3) and a rotation center C1 of a rear wheel Rw is made horizontal.

A front-rear direction, an up-down direction, and a left-right direction are defined based on the saddled vehicle 1 in the reference posture. The left-right direction corresponds to a vehicle width direction. A vehicle center WO corresponds to a vertical plane that passes a center line of a headpipe 3 and is perpendicular to the rotation center C1 of the rear wheel Rw. As used herein, the term "a plan view" and "a side view" mean a plan view and a side view of the saddled vehicle 1, respectively, as long as particularly described otherwise.

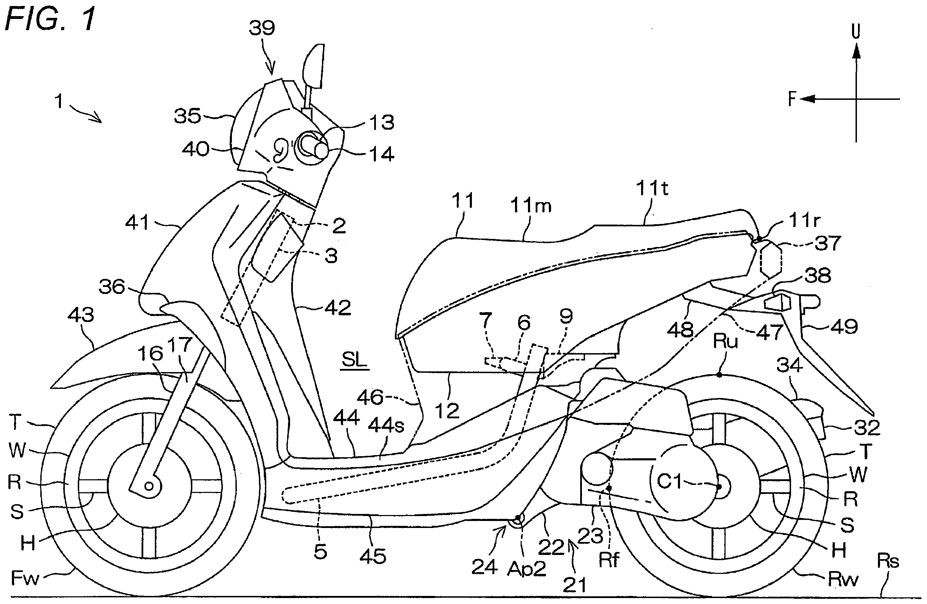

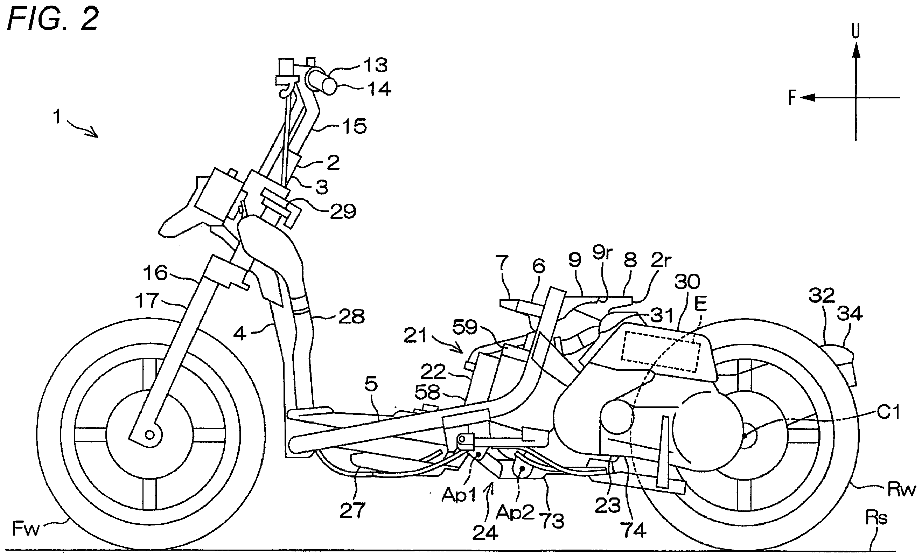

FIG 1 is a left side view illustrating the saddled vehicle 1 according to an embodiment of the invention. FIGS. 2, 3, and 4 are a left side view, a plan view, and a right side view respectively illustrating the saddled vehicle 1 with an exterior cover 39, a seat 11, and a stowage box 12 removed. In FIG 1, "U" and "F" denote an up direction and a front direction of the saddled vehicle 1, respectively. In FIG 2, "L" denotes a left direction of the saddled vehicle 1. The above denotations will be true with other drawings. Consequently, an opposite direction to a direction denoted by an arrow U, an opposite direction to a direction denoted by an arrow F, and an opposite direction to a direction denoted by an arrow L denote a down direction, a rear direction, and a right direction of the saddled vehicle 1, respectively.

In this description, a "front-rear direction of the body frame," a "left-right direction of the body frame" and an "up-down direction of the body frame" mean a front-rear direction, a left-right direction and an up-down direction based on the body frame when viewed from a rider who rides the leaning vehicle. "A side of or sideways of the body frame" means directly on the right or left in the left-right direction of the body frame.

In this description, an expression "extending in the front-rear direction of the leaning body frame" includes a fact that it extends while being inclined in relation to the front-rear direction of the leaning body frame and means that it extends in a direction closer to the front-rear direction of the leaning body frame than the left-right direction and up-down direction of the leaning body frame.

In this description, an expression "extending in the left-right direction of the leaning body frame" includes a fact that it extends while being inclined in relation to the left-right direction of the leaning body frame and means that it extends in a direction closer to the left-right direction of the leaning body frame than the front-rear direction and up-down direction of the leaning body frame.

In this description, an expression "extending in the up-down direction of the leaning body frame" includes a fact that it extends while being inclined in relation to the up-down direction of the leaning body frame and means that it extends in a direction closer to the up-down direction of the leaning body frame than the left-right direction and front-rear direction of the leaning body frame.

In this description, an expression reading "directly on the left of a member A in the left-right direction of the body frame" denotes a space through which the member A passes when the member A is translated to the left in the left-right direction of the body frame. An expression reading "directly on the right of the member A" is also defined in the same way.

In this description, an expression reading "on the left of the member A in the left-right direction of the body frame" includes not only the space through which the member A passes when the member A is translated to the left in the left-right direction of the body frame but also a space which expands from the space in directions which are at right angles to the left-right direction of the body frame. An expression reading "on the right of the member A" is also defined in the same way.

In this description, an expression reading "directly above the member A in the up-down direction of the body frame" denotes a space through which the member A passes when the member A is translated rightward in the up-down direction of the body frame. An expression reading "directly below the member A" is also defined in the same way.

In this description, an expression reading "above the member A in the up-down direction of the body frame" includes not only the space through which the member A passes when the member A is translated rightward in the up-down direction of the body frame but also a space which expands from the space in directions which are at right angles to the up-down direction of the body frame. An expression reading "below the member A" is also defined in the same way.

In this description, an expression reading "directly ahead of the member A in the front-rear direction of the body frame" denotes a space through which the member A passes when the member A is translated to the front in the front-rear direction of the body frame. An expression reading "directly behind the member A" is also defined in the same way.

In this description, an expression reading "ahead of the member A in the front-rear direction of the body frame" includes not only the space through which the member A passes when the member A is translated to the front in the front-rear direction of the body frame but also a space which expands from the space in directions which are at right angles to the front-rear direction of the body frame. An expression reading "behind the member A" is also defined in the same way.

In this description, "rotation, rotating or rotated" means that a member is displaced at an angle of 360 degrees or more about an axis thereof. In this description, "turn, turning or turned" means that a member is displaced at an angle less than 360 degrees about an axis thereof.

In this description, "connected" or "coupled" specifies not only a case where one member and another member are directly connected but also a case where one member and another member are indirectly connected by way of still another member.

As illustrated in FIG 1, the saddled vehicle 1 is, for example, a scooter. The saddled vehicle 1 includes a body frame 2 covered with the exterior cover 39. The body frame 2 includes the headpipe 3 extending rearwards and obliquely upwards. As illustrated in FIG 2, the body frame 2 further includes a down frame 4 extending rearwards and obliquely downwards from the headpipe 3, and a pair of lower frames 5, which extend rearwards and obliquely upwards from the down frame 4. The down frame 4 and the lower frames 5 are, for example, hollow metallic members. Front ends of the pair of lower frames 5 are disposed below the headpipe 3. The pair of lower frames 5 are overlapping with each other when viewed from the left-right direction of the body frame 2.

As illustrated in FIG 1, the saddled vehicle 1 includes the saddle-type seat 11, on which a rider sits, and the stowage box 12 disposed directly below the seat 11. FIG 1 illustrates an example in which the seat 11 includes a main seat 11m, on which the rider sits, and a tandem seat 11t, on which a passenger sits. The seat 11 may be a seat on which only the rider sits. The seat 11 and the stowage box 12 are disposed directly behind the headpipe 3. An opening provided in an upper end portion of the stowage box 12 is opened and closed by the seat 11. FIG 1 illustrates a state in which the seat 11 is placed in a closing position where the opening of the stowage box 12 is closed by the seat 11.

The seat 11 is coupled to the body frame 2 by way of the stowage box 12. As illustrated in FIG 3, the body frame 2 includes a cross member 6 extending from the right lower frame 5 to the left lower frame 5, a pair of front stays 7 extending forwards from the cross member 6, and a pair of rear stays (a right rear stay 8 and a left rear stay 9) extending rearwards from the pair of lower frames 5. The stowage box 12 is detachably fixed to the front stays 7, the right rear stay 8, and the left rear stay 9 with a plurality of bolts.

The front stays 7 are disposed ahead of the right rear stay 8 and the left rear stay 9. A space defined between the pair of front stays 7 in the vehicle width direction is narrower than a space defined between the right rear stay 8 and the left rear stay 9 in the vehicle width direction. The front stays 7 are disposed in positions inner than the right rear stay 8 and the left rear stay 9 in the vehicle width direction. The front stays 7 are disposed directly ahead of the rear wheel Rw when viewed from the up-down direction of the body frame 2. The right rear stay 8 and the left rear stay 9 are disposed in positions outer than the rear wheel Rw in the vehicle width direction.

The right rear stay 8 and the left rear stay 9 are both made of, for example, metal. The right rear stay 8 extends rearwards from the right lower frame 5. The left rear stay 9 extends rearwards from the left lower frame 5. A rear end of the right rear stay 8 is disposed behind a rear end 9r of the left rear stay 9. The rear end of the right rear stay 8 corresponds to a rear end 2r of the body frame 2. The rear end 2r of the body frame 2 is disposed ahead of the rotation center C1 of the rear wheel Rw. On the other hand, a rear end 11r of the seat 11 is disposed behind the rotation center C1 of the rear wheel Rw.

As illustrated in FIG 2, a steering device 13 for steering the saddled vehicle 1 includes the steering handle 14 adapted to be operated by the rider, and a front fork 16 for rotatably supporting a front wheel Fw. The front fork 16, which represents an example of a front wheel supporting member, includes a pair of fork pipes 17 which are disposed individually directly on the right and left of the front wheel Fw, and a steering shaft 15 which is inserted in the headpipe 3. The front wheel Fw includes a rubber tire T configured to roll on the road surface Rs and a metallic wheel W surrounded by the tire T. The wheel W includes an annular rim R surrounded by the tire T, an annular hub H surrounded by the rim R, and a plurality of spokes extending from the hub H to the rim R. The rear wheel Rw also includes a tire T and a wheel W.

The steering shaft 15 protrudes upwards from an upper end portion of the headpipe 3. The steering handle 14 is coupled to an upper end portion of the steering shaft 15. The steering handle 14 is disposed directly above the headpipe 3. When the steering handle 14 is operated, the front wheel Fw turns to the left or right about the center line of the headpipe 3 together with the steering handle 14 and the front fork 16. This causes the saddled vehicle 1 to be steered.

The saddled vehicle 1 includes a swing unit 21 configured to swing up and down with respect to the body frame 2. The swing unit 21 represents an example of a power unit for propelling the saddled vehicle 1. The swing unit 21 includes an engine 22 for generating power for rotating the rear wheel Rw and a transmission mechanism 23 for transmitting the power of the engine 22 to the rear wheel Rw. The transmission mechanism 23 extends rearwards from the engine 22. The rear wheel Rw is rotatably supported by the transmission mechanism 23. The engine 22 is attached to the body frame 2 by way of an anti-vibration link 24. The rear wheel Rw and the swing unit 21 can swing in the up-down direction of the body frame 2 about each of a horizontal front pivot axis Ap1 and a horizontal rear pivot axis Ap2 extending through the anti-vibration link 24 in the vehicle width direction.

As illustrated in FIG 3, the rear wheel Rw is disposed directly on the right of the swing unit 21. The saddled vehicle 1 includes a rear arm 25 disposed directly on the right of the rear wheel Rw, and a rear suspension 26 for absorbing vibrations of the swing unit 21. The rear wheel Rw is disposed between the swing unit 21 and the rear arm 25 in the vehicle width direction. The rear wheel Rw is rotatably supported by the swing unit 21 and the rear arm 25.

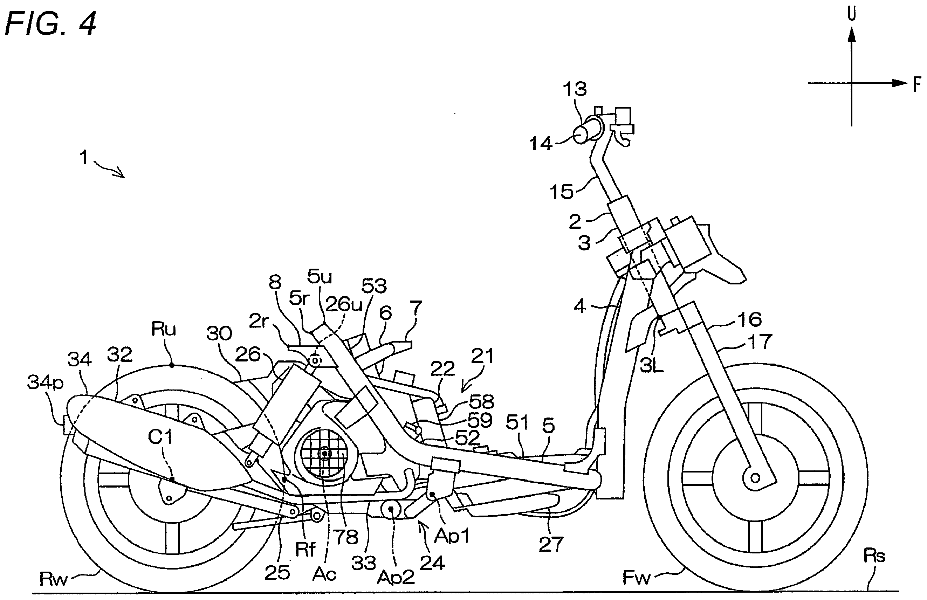

As illustrated in FIG 4, an upper end portion of the rear suspension 26 is attached to the body frame 2, while a lower end portion of the rear suspension 26 is attached to the swing unit 21 by way of the rear arm 25. The rear suspension 26 is disposed on the right of the rear wheel Rw. Consequently, the rear suspension 26 is disposed on an opposite side of the rear wheel Rw to a side thereof where the transmission mechanism 23 is disposed. The rear suspension overlaps the rear wheel Rw when viewed from the left-right direction of the body frame 2.

As illustrated in FIG 2, the saddled vehicle 1 includes a fuel tank 27 for storing fuel which is to be supplied to the engine 22. The fuel tank 27 is attached to the body frame 2. The fuel tank 27 is disposed directly below a footboard 44 (refer to FIG 1), which will be described later. The fuel tank 27 may be disposed in a position other than the position directly below the footboard 44. The fuel tank 27 is disposed between the pair of lower frames 5 in the vehicle width direction. The fuel tank 27 is disposed directly ahead of the engine 22 when viewed from the up-down direction of the body frame 2. A filler cap 29 configured to open and close a fuel filler port is disposed in a position outer than the headpipe 3 in the vehicle width direction. Fuel flowing into the fuel filler port is guided into the fuel tank 27 by a fuel piping 28 extending upwards from the fuel tank 27.

As illustrated in FIG 3, the saddled vehicle 1 includes an air cleaner box 30 accommodating an element E for removing foreign matters from air that is supplied to the engine 22, and an intake pipe 31 for guiding air from the air cleaner box 30 to the engine 22. The saddled vehicle 1 further includes a muffler 32 for discharging exhaust gases generated in the engine 22 to the atmosphere. The muffler 32 includes an exhaust pipe 33 for guiding exhaust gases discharged from the engine 22 downstream and a silencer 34 for discharging exhaust gases guided by the exhaust pipe 33 from an exhaust outlet 34p opening to the atmosphere.

The air cleaner box 30 is disposed directly above the transmission mechanism 23. The engine 22 is disposed directly ahead of the air cleaner box 30 when viewed from the up-down direction of the body frame 2. The intake pipe 31 extends forwards from the air cleaner box 30. As illustrated in FIG 4, the exhaust pipe 33 extends rearwards from the engine 22. The silencer 34 extends rearwards from the exhaust pipe 33. The exhaust pipe 33 and the silencer 34 are disposed directly on the right of the rear arm 25 so as to overlap the rear arm 25 when viewed from the left-right direction of the body frame 2. A front end portion of the exhaust pipe 33 is attached to the engine 22. The silencer 34 is attached to the rear arm 25. The muffler 32 can swing up and down relative to the body frame 2 together with the rear wheel Rw and the swing unit 21.

As illustrated in FIG 1, the saddled vehicle 1 includes a headlamp 35 for emitting light forwards and two front direction indicator lamps 36 configured to turn on and off in response to an operation by the rider. The saddled vehicle 1 further includes a tail lamp 37 for emitting light rearwards and two rear direction indicator lamps 38 configured to turn on and off in response to an operation by the rider. The headlamp 35 and the front direction indicator lamps 36 are disposed ahead of the seat 11. The tail lamp 37 and the rear direction indicator lamps 38 are disposed behind a front end Rf of the rear wheel Rw.

The exterior cover 39 of the saddled vehicle 1 includes a steering handle cover 40 having a portion disposed directly ahead of the steering handle 14 and a portion disposed directly behind the steering handle 14, a front cover 41disposed directly ahead of the headpipe 3, and a leg shield 42 disposed directly behind the headpipe 3. The leg shield 42 is disposed between the headpipe 3 and the seat 11 in the front-rear direction. The exterior cover 39 includes a front fender 43 disposed directly above the front wheel Fw. The front fender 43 turns to the left and right together with the front wheel Fw. The steering handle covers 40 turn to the left and right together with the steering handle 14.

The exterior cover 39 includes the footboard 44 disposed directly above the pair of lower frames 5, a pair of lower side covers 45 disposed individually directly on the right and left of the pair of lower frames 5, and a lower cover 46 disposed directly below the seat 11. The lower cover 46 is disposed directly behind the leg shield 42. The exterior cover 39 defines a leg space SL for placing feet and legs of the rider, who sits on the seat 11, between the leg shield 42 and the lower cover 46 in the front-rear direction.

The feet of the rider sitting on the seat 11 are rested on a flat face 44s provided on an upper face of the footboard 44. The flat face 44s extends in the vehicle width direction from a right end of the saddled vehicle 1 to a left end of the saddled vehicle 1. The flat face 44s may be a completely flat face which is free from irregularities or a substantially flat face on which recessed portions or projecting portions are provided which are recessed or projecting to such an extent that placing the feet thereon is not interrupted (for example, recessed portions which are 1 to 2 cm deep or projecting portions which are projecting 1 to 2 cm tall). With the feet of the rider sitting on the seat 11 rested on the flat face 44s, the legs of the rider are disposed directly behind the leg shield 42.

The exterior cover 39 includes a pair of rear side covers 47 disposed individually directly on the right and left of the stowage box 12, and a rear fender 49 disposed directly above and directly behind the rear wheel Rw. The rear fender 49 is supported on the stowage box 12 by way of a stay 48 extending rearwards from the stowage box 12. The rear fender 49 extends downwards from the stay 48. The two rear direction indicator lamps 38 are attached to the rear fender 49. The tail lamp 37 is attached to the body frame 2 by way of the stowage box 12. The tail lamp 37 is disposed directly behind the stowage box 12.

As illustrated in FIG 4, the lower frame 5 includes a front frame 51 disposed directly below the footboard 44 (refer to FIG 1), a rear frame 53 disposed directly below the seat 11 (refer to FIG 1), and a corner frame 52 extending from the front frame 51 to the rear frame 53. The front frame 51 extends rearwards in an obliquely upward direction from the down frame 4. The rear frame 53 extends rearwards in an obliquely upward direction from the corner frame 52.

The rear frame 53 overlaps the engine 22 when viewed from the left-right direction of the body frame 2. The rear frame 53 is disposed directly ahead of the rear suspension 26 when viewed from the left-right direction of the body frame 2. The rear suspension 26 extends rearwards in an obliquely downward direction from the right rear stay 8 fixed to the rear frame 53. The rear frame 53 is inclined rearwards when viewed from the left-right direction of the body frame 2, whereas the rear suspension 26 is inclined forwards when viewed from the left-right direction of the body frame 2. The rear frame 53 and the rear suspension 26 are spaced away from each other in the front-rear direction. A cooling fan 78, which will be described later, is disposed between the rear frame 53 and the rear suspension 26 in the front-rear direction.

The exhaust pipe 33 is disposed directly below the rear frame 53 and the rear suspension 26 when viewed from the left-right direction of the body frame 2. A front end portion of the exhaust pipe 33 is disposed directly below the engine 22 when viewed from the left-right direction of the body frame 2. A rear end portion of the exhaust pipe 33 is disposed directly below the rear suspension 26 when viewed from the left-right direction of the body frame 2. The cooling fan 78 is disposed directly above the exhaust pipe 33 when viewed from the left-right direction of the body frame 2. The cooling fan 78 is disposed within a triangular space surrounded by the rear frame 53, the rear suspension 26, and the exhaust pipe 33 when viewed from the left-right direction of the body frame 2.

An upper end of the rear frame 53 corresponds to an upper end 5u of the lower frame 5. A rear end of the rear frame 53 corresponds to a rear end 5r of the lower frame 5. The right rear stay 8 extends rearwards from the rear frame 53. The rear end 2r of the right rear stay 8 is disposed behind the rear end 5r of the lower frame 5. The rear end of the right rear stay 8 corresponds to the rear end 2r of the body frame 2. The rear end 2r of the body frame 2 is disposed below the rear end 5r of the lower frame 5.

The upper end 5u of the lower frame 5 is disposed below a lower end 3L of the headpipe 3. The upper end 5u of the lower frame 5 is disposed above a cylinder 57, which will be described later. The upper end 5u of the lower frame 5 is disposed above a rotation axis Ac of a crankshaft 55, which will be described later. The rear end 5r of the lower frame 5 is disposed behind the rotation axis Ac of the crankshaft 55. The rear end 5r of the lower frame 5 is disposed above an upper end 26u of the rear suspension 26. The rear end 5r of the lower frame 5 is disposed above an upper end Ru of the rear wheel Rw. The rear end 5r of the lower frame 5 is disposed ahead of the front end Rf of the rear wheel Rw.

The rear end 2r of the body frame 2 is disposed below the lower end 3L of the headpipe 3. The rear end 2r of the body frame 2 is disposed above the cylinder 57. The rear end 2r of the body frame 2 is disposed above the rotation axis Ac of the crankshaft 55. The rear end 2r of the body frame 2 is disposed behind the rotation axis Ac of the crankshaft 55. The rear end 2r of the body frame 2 is disposed above the upper end Ru of the rear wheel Rw. The rear end 2r of the body frame 2 is disposed ahead of the rotation center C1 of the rear wheel Rw. The rear end 2r of the body frame 2 is disposed above the upper end 26u of the rear suspension 26u.

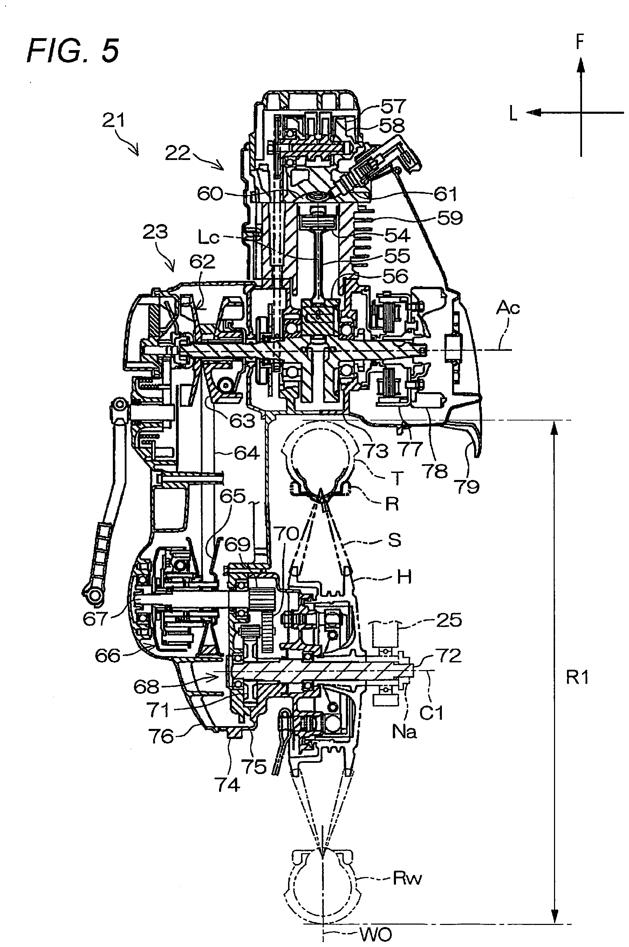

Next, the swing unit 21 will be described. FIG 5 is a section view illustrating an interior of the swing unit 21.

The engine 22 includes a piston 54 configured to reciprocate as fuel is burned, the cylinder 57 accommodating the piston 54, the crankshaft 55 configured to rotate as the piston 54 reciprocates, and a connecting rod 56 connecting the piston 54 with the crankshaft 55. FIG 5 illustrates an example in which a center line Lc of the cylinder 57 extends in the front-rear direction when viewed from the up-down direction of the body frame 2 and the rotation axis Ac of the crankshaft 55 extends in the left-right direction when viewed from the up-down direction of the body frame 2. The directions of the center line Lc of the cylinder 57 and the rotation axis Ac of the crankshaft 55 are not limited to those described above.

The cylinder 57 includes a cylinder body 59 accommodating the piston 54, and a cylinder head 58 defining, together with the piston 54 and the cylinder body 59, a combustion chamber 60 where an air-and-fuel mixture is burned. The engine 22 includes a spark plug 61 for initiating ignition of the air-and-fuel mixture within the combustion chamber 60, an intake valve for opening and closing an intake port opened to the interior of the combustion chamber 60, and an exhaust valve for opening and closing an exhaust port opened to the interior of the combustion chamber 60. Air is supplied into the combustion chamber 60 via the intake port, while exhaust gases are discharged from the combustion chamber 60 via the exhaust port.

The transmission mechanism 23 incudes a belt-type continuously variable transmission (CVT) 62 capable of transmitting rotations from the engine 22 to the rear wheel Rw while continuously varying the speed of the rotations. The CVT 62 includes a drive pulley 63 configured to rotate together with the crankshaft 55, a driven pulley 65 disposed directly behind the drive pulley 63, an endless belt 64 stretched between the drive pulley 63 and the driven pulley 65, and a secondary shaft 67 coupled to the driven pulley 65 by way of a centrifugal clutch 66. The rotation of the crankshaft 55 is transmitted to the driven pulley 65 while its speed is continuously varied by the drive pulley 63, the endless belt 64, and the driven pulley 65. This enables the rotation of the crankshaft 55 to be transmitted to the secondary shaft 67.

The transmission mechanism 23 further includes a reduction gearing 68 configured to transmit the rotations transmitted from the CVT 62 towards the rear wheel Rw while reducing the speed of the rotations. The reduction gearing 68 includes a drive gear 69 configured to rotate together with the secondary shaft 67, a counter gear 70 brought into meshing engagement with the drive gear 69, and a driven gear 71 brought into meshing engagement with the counter gear 70. A rotation of the secondary shaft 67 is transmitted to the driven gear 71 by way of the drive gear 69 and the counter gear 70. An axle shaft 72 extending in the vehicle width direction is fitted into the driven gear 71 so as to rotate together with the driven gear 71. The axle shaft 72 extends through the hub H of the rear wheel Rw in the vehicle width direction and is fixed to the wheel W of the rear wheel Rw by an axle nut Na. This enables the rotation of the crankshaft 55 to be transmitted to the rear wheel Rw.

The engine 22 includes a crankcase 73 accommodating the crankshaft 55. The transmission mechanism 23 includes a CVT case 74 accommodating the CVT 62. The centrifugal clutch 66 and the reduction gearing 68 are also accommodated in the CVT case 74. The CVT case 74 includes a main case 75 disposed directly on the left of the crankcase 73, and a side case 76 disposed directly on the left of the main case 75. The CVT 62 is installed in the main case 75 and the side case 76. The crankcase 73 extends rightwards from the main case 75. The cylinder body 59 extends forwards from the crankcase 73.

The axle shaft 72 protrudes in the vehicle width direction from the main case 75 of the CVT case 74. Both end portions of the axle shaft 72 are supported on the rear arm 25 and the CVT case 74. The rear arm 25 is disposed directly on the right of the rear wheel Rw. The CVT case 74 is disposed directly on the left of the rear wheel Rw. The rear wheel Rw is disposed between the rear arm 25 and the CVT case 74 in the vehicle width direction. The rear wheel Rw is supported on the rear arm 25 and the CVT case 74 by way of the axle shaft 72.

The swing unit 21 includes a generator 77 (for example, a flywheel magneto) configured to generate electric power as the crankshaft 55 rotates, the cooling fan 78 configured to rotate together with the crankshaft 55, and a shroud 79 accommodating the generator 77 and the cooling fan 78. The generator 77, the cooling fan 78, and the shroud 79 are disposed on an opposite side of the crankcase 73 to a side thereof where the transmission mechanism 23 is disposed. The generator 77 and the cooling fan 78 are disposed between the crankcase 73 and the shroud 79 in the vehicle width direction. The cooling fan 78 is disposed in a position outer than the generator 77 in the vehicle width direction. The generator 77 and the cooling fan 78 surround the crankshaft 55.

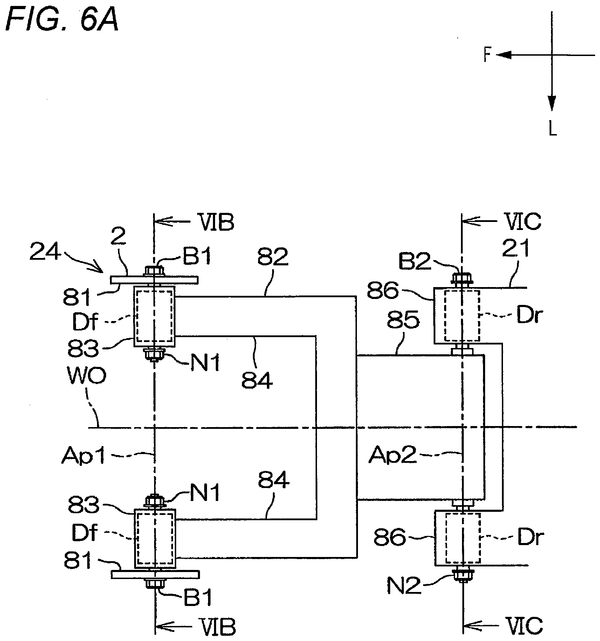

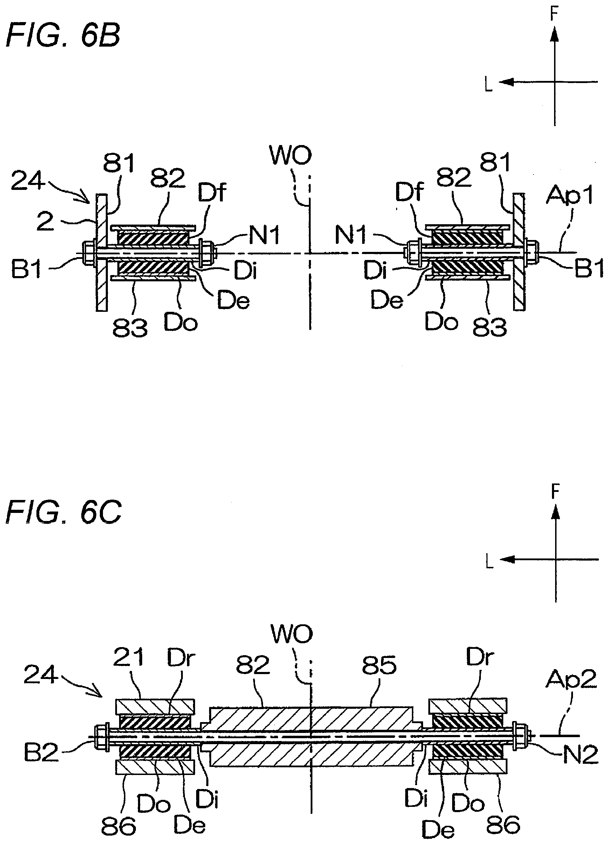

Next, the anti-vibration link 24 will be described. FIG 6A illustrates an external appearance of the anti-vibration link 24 viewed from below in the up-down direction of the body frame 2. FIG 6B illustrates a cross section of the anti-vibration link 24 viewed from a direction indicated by arrows along a line VIB-VIB in FIG 6A. FIG 6C illustrates a cross section of the anti-vibration link 24 viewed from a direction indicated by arrows along a line VIC-VIC in FIG 6A.

As illustrated in FIG 6A, the anti-vibration link 24 includes a link member 82 configured to be interposed between the body frame 2 and the swing unit 21, and at least one damper unit configured to absorb vibrations of the swing unit 21. FIG 6A illustrates an example in which the anti-vibration link 24 includes a pair of front damper units Df configured to be interposed between the body frame 2 and the link member 82, and a pair of rear damper units Dr configured to be interposed between the link member 82 and the swig swing 21. The link member 82 is coupled to the body frame 2 by way of the pair of front damper units Df and is coupled to the swing unit 21 by way of the pair of rear damper units Dr.

The swing unit 21 can swing with respect to the body frame 2 about the front pivot axis Ap1 extending in the vehicle width direction and the rear pivot axis Ap2 extending the vehicle width direction. The front pivot axis Ap1 represents an example of a first pivot axis. The rear pivot axis Ap2 represents an example of a second pivot axis.

The pair of front damper units Df is disposed on the front pivot axis Ap 1. The pair of rear damper units Dr is disposed on the rear pivot axis Ap2. The front pivot axis Ap1 is disposed ahead of the rear pivot axis Ap2. The front pivot axis Ap1 is disposed above the rear pivot axis Ap2. The front pivot axis Ap1 and the rear pivot axis Ap2 are disposed ahead of the rotation axis Ac of the crankshaft 55 (refer to FIG 4). The front pivot axis Ap1 and the rear pivot axis Ap2 are disposed below the rotation axis Ac of the crankshaft 55.

The pair of front damper units Df is held by the link member 82. The pair of rear damper units Dr is held by the swing unit 21. The link member 82 includes a pair of front holder portions 83 for holding the pair of front damper units Df. The swing unit 21 includes a pair of rear holder portions 86 for holding the pair of rear damper units Dr. The pair of front damper units Df may be held onto the body frame 2. The pair of rear damper units Dr may be held onto the link member 82.

In addition to the pair of front holder portions 83, the link member 82 includes a base portion 85 disposed between the pair rear holder portions 86 in the vehicle width direction, and arm portions 84 extending from the base portion 85 towards the pair of front holder portions 83. The pair of front holder portions 83 of the link member 82 is disposed between a pair of lower stays 81 provided on the body frame 2. The pair of lower stays 81 extends downwards individually from the pair of lower frames 5 (refer to FIG 4). The lower stays 81 are fixed individually to the corresponding lower frames 5.

As illustrated in FIG 6B, each of the front damper units Df includes a cylindrical elastic body De made from rubber or resin, an inner tube Di surrounded by the elastic body De, and an outer tube Do surrounding the elastic body De. Each of other damper units including the rear damper units Dr and the like (as well as an upper damper unit Du and a lower damper unit DL, which will be described later) also includes an elastic body De, an inner tube Di, and an outer tube Do. An outer circumferential face of the inner tube Di is coupled to an inner circumferential face of the elastic body De with an adhesive or the like. An inner face of the outer tube Do is coupled to an outer circumferential face of the elastic body De with an adhesive or the like. When it is applied a force which causes the inner tube Di and the outer tube Do to rotate relative to each other, the elastic body De is deformed elastically so as to allow the relative rotation of the inner tube Di and the outer tube Do.

The outer tube Do of the front damper unit Df is inserted into the front holder portion 83 and is fixed thereto. The front damper unit Df is disposed in a position inner than the lower stay 81 in the vehicle width direction. A bolt B1 extends through the lower stay 81 in the vehicle width direction and is inserted into the inner tube Di of the front damper unit Df. A nut N1 is disposed in a position inner the front damper unit Df in the vehicle width direction and is screwed onto the bolt B1. The inner tube Di of the front damper unit Df is held by the bolt B1 and the nub N1 therebetween in the vehicle width direction. This enables the inner tube Di of the front damper unit Df to be fixed to the lower stay 81.

As illustrated in FIG 6C, the outer tube Do of the rear damper unit Dr is inserted into the rear holder portion 86 and is fixed thereto. A bolt B2 extends through the pair of rear damper units Dr and the base portion 85 of the link member 82 in the vehicle width direction. A nut N2 is screwed onto the bolt B2. The inner tubes Di of the pair of rear damper units Dr are held by the bolt B2 and the nut N2 therebetween in the vehicle width direction. The base portion 85 of the link member 82 is held by the inner tubes Di of the pair of rear damper units Dr therebetween in the vehicle width direction. This enables the base portion 85 of the link member 82 to be fixed to the inner tubes Di of the pair of rear damper units Dr.

Next, the air cleaner box 30 and the rear arm 25 will be described. FIG 7 is a right side view illustrating a rear part of the saddled vehicle 1 with the exterior cover 39, the seat 11, and the stowage box 12 removed therefrom. FIG 8 is a plan view illustrating the rear part of the saddled vehicle 1 with the exterior cover 39, the seat 11, and the stowage box 12 removed therefrom. FIG 9 is a right side view illustrating the rear part of the saddled vehicle 1 with the rear suspension 26 and the muffler 32 removed therefrom in addition to the exterior cover 39, the seat 11, and the stowage box 12.

As illustrated in FIG 8, the air cleaner box 30 includes a center box 91 and a side box 92, which are aligned in the vehicle width direction. The center box 91 and the side box 92 accommodate the element E. The center box 91 and the side box 92 are disposed ahead of the rotation center C1 of the rear wheel Rw. The side box 92 is disposed directly on the left of the center box 91. The side box 92 is disposed directly above the CVT case 74 and overlaps the CVT case 74 when viewed from the up-down direction of the body frame 2.

The center box 91 is disposed directly behind the cylinder 57 when viewed from the up-down direction of the body frame 2. The intake pipe 31 extends forwards from the center box 91. The center box 91 is disposed directly above the CVT case 74 and the rear wheel Rw and overlaps the CVT case 74 and the rear wheel Rw when viewed from the up-down direction of the body frame 2. Further, the center box 91 is disposed directly above the crankcase 73 and overlaps the crankcase 73 when viewed from the up-down direction of the body frame 2.

The air cleaner box 30 includes a front portion 93 disposed directly ahead of the rear wheel Rw, and a side portion 94 disposed at a side of the rear wheel Rw. The front portion 93 and the side portion 94 make up a part of the center box 91. The side portion 94 is disposed in a position outer than the rear wheel Rw in the vehicle width direction. The side portion 94 is disposed between the rear wheel Rw and the side box 92 in the vehicle width direction. The front side portion 93 extends rightwards from the side portion 94.

A side face of the front portion 93 corresponds to a side face 30s of the air cleaner box 30. The side face 30s of the air cleaner box 30 is disposed on the right of the rear wheel Rw. As illustrated in FIG 7, the rear suspension 26 is disposed directly on the right of the air cleaner box 30 and overlaps the side face 30s of the air cleaner box 30 when viewed from the left-right direction of the body frame 2.

As illustrated in FIG 9, the rear arm 25 extends rearwards from the crankcase 73. The rear arm 25 is detachably fixed to the crankcase 73. The axle shaft 72 is supported by the rear arm 25. The rear arm 25 includes at least one fixing portion fixed to the crankcase 73 and an axle shaft supporting portion 96 configured to support the axle shaft 72. FIG 9 illustrates an example in which two fixing portions (an upper fixing portion 95u and a lower fixing portion 95L) are provided on the rear arm 25.

The upper fixing portion 95u and the lower fixing portion 95L are fixed to the crankcase 73 with two bolts B3. The upper fixing portion 95u and the lower fixing portion 95L are disposed behind the rotation axis Ac of the crankshaft 55. The upper fixing portion 95u and the lower fixing portion 95L are disposed ahead of the rotation center C1 of the rear wheel Rw. The upper fixing portion 95u is disposed above the rotation axis Ac of the crankshaft 55 and the rotation center C1 of the rear wheel Rw. The lower fixing portion 95L is disposed below the rotation axis Ac of the crankshaft 55 and the rotation center C1 of the rear wheel Rw. The upper fixing portion 95u is disposed below the upper end Ru of the rear wheel Rw.

The axle shaft supporting portion 96 is disposed behind the upper fixing portion 95u and the lower fixing portion 95L. The axle shaft supporting portion 96 is disposed directly on the right of the rear wheel Rw. The axle shaft 72 is inserted into a through hole extending through the axle shaft supporting portion 96 in the left-right direction. The axle shaft 72 is supported on the axle shaft supporting portion 96 by way of a bearing disposed between the axle shaft 72 and the axle shaft supporting portion 96. As illustrated in FIG 8, the axle shaft supporting portion 96 is disposed between the rear wheel Rw and the silencer 34 in the vehicle width direction.

The silencer 34 is attached to the rear arm 25. Similarly, the rear suspension 26 is attached to the rear arm 25. The rear arm 25 incudes at least one muffler attaching portion where the muffler 32 is attached and a suspension attaching portion 99 where the rear suspension 26 is attached. FIG 9 illustrates an example in which three muffler attaching portions (a front muffler attaching portion 97f, a rear muffler attaching portion 97r, and a lower muffler attaching portion 97L) are provided on the rear arm 25.

As illustrated in FIG 8, a front bracket 98f of the silencer 34 is placed on a side face of the front muffler attaching portion 97f of the rear arm 25. A bolt B4, with which the front bracket 98f is fixed to the front muffler attaching portion 97f, is inserted into a through hole extending through the front bracket 98f and the front muffler attaching portion 97f in the left-right direction. The front bracket 98f is laterally held by the bolt B4 and the front muffler attaching portion 97f therebetween. This enables the front bracket 98f to be fixed to the front muffler attaching portion 97f. A rear bracket 98r of the silencer 34 is fixed to the rear muffler attaching portion 97r, and a lower bracket 98L of the silencer 34 is fixed to the lower muffler attaching portion 97L.

As illustrated in FIG 9, the suspension attaching portion 99 is disposed behind the upper fixing portion 95u and the lower fixing portion 95L. The suspension attaching portion 99 is disposed above the rotation axis Ac of the crankshaft 55 and the rotation center C1 of the rear wheel Rw. The suspension attaching portion 99 is disposed ahead of the axle shaft supporting portion 96. The suspension attaching portion 99 is disposed ahead of the front muffler attaching portion 97f, the rear muffler attaching portion 97r, and the lower muffler attaching portion 97L. The lower damper unit DL is held within the suspension attaching portion 99. The rear suspension 26 is attached to the suspension attaching portion 99 by way of the lower damper unit DL.

Next, the rear suspension 26 will be described. FIG 10 is a right side view illustrating the rear part of the saddled vehicle 1 with the exterior cover 39, the seat 11, and the stowage box 12 removed therefrom. FIG 11 is a plan view illustrating the rear part of the saddled vehicle 1 with the air cleaner box 30 removed therefrom in addition to the exterior cover 39, the seat 11, and the stowage box 12. FIG 12 is a section view illustrating an interior of the rear suspension 26. FIG 13 is a section view illustrating an interior of a hydraulic damper 103 provided in the rear suspension 26. In FIG 10, a bolt Bu and a bolt BL (refer to FIG. 11) are omitted from illustration.

As illustrated in FIGS. 10 and 11, the rear suspension 26 includes an upper mount bracket 101 attached to the body frame 2 and a lower mount bracket 102 attached to the swing unit 21 by way of the rear arm 25. The upper mount bracket 101 represents an example of an upper coupling portion. The lower mount bracket 102 represents an example of a lower coupling portion.

As illustrated in FIG 12, the rear suspension 26 includes the hydraulic damper 103 disposed between the upper mount bracket 101 and the lower mount bracket 102. The rear suspension 26 further includes a coil spring 104 surrounding the hydraulic damper 103, an upper stopper 105 and a lower stopper 106 supporting the coil spring 104, and a tubular suspension cover 107 surrounding the hydraulic damper 103 and the coil spring 104.

The upper mount bracket 101 is coupled to an upper end portion of the hydraulic damper 103. The lower mount bracket 102 is coupled to a lower end portion of the hydraulic damper 103. The upper stopper 105 is provided on the upper mount bracket 101. The lower stopper 106 is provided on the hydraulic damper 103. The hydraulic damper 103 is inserted into the coil spring 104. The coil spring 104 is held by the upper stopper 105 and the lower stopper 106 therebetween in an axial direction Da of the hydraulic damper 103.

The hydraulic damper 103 can perform a telescopic action along the axial direction Da of the hydraulic damper 103. The axial direction Da is a direction along a telescopic axis Ls of the rear suspension 26. The telescopic action of the hydraulic damper 103 in the axial direction Da enables damping of a displacement of the rear wheel Rw in the up-down direction of the body frame 2. The hydraulic damper 103 represents an example of a shock absorber.

As illustrated in FIG 13, the hydraulic damper 103 includes a cylinder tube 108 for accommodating oil, a piston valve 110 configured to move in the axial direction Da of the hydraulic damper 103 in an interior of the cylinder tube 108, and a piston rod 109 protruding in the axial direction Da of the hydraulic damper 103 from the cylinder tube 108 and configured to move together with the piston valve 110 in the axial direction Da of the hydraulic damper 103. FIG 13 illustrates an example in which the hydraulic damper 103 is a twin-tube damper and the piston rod 109 protrudes upwards from the cylinder tube 108. The hydraulic damper 103 may be a mono-tube damper. The piston rod 109 may protrude downwards from the cylinder tube 108.

As illustrated in FIG 13, in the case of the hydraulic damper 103 being the twin-tube damper, the cylinder tube 108 includes an inner tube 108i surrounding the piston valve 110 and an outer tube 108o surrounding the inner tube 108i. An interior space of the inner tube 108i is divided into two oil chambers, an oil chamber O1 and an oil chamber O2 separated in the axial direction Da of the hydraulic damper 103 by the piston valve 110. A fluid chamber F1 defined between the inner tube 108i and the outer tube 108o is connected with the oil chamber O2 by way of a base valve 111. Oil is accommodated in the oil chamber O1 and the oil chamber O2. Oil and gas (nitrogen gas or the like) are accommodated in the fluid chamber F1.

Irrespective of the fact that the hydraulic damper 103 is the single-tube damper or the twin-tube damper, the oil chamber O1, the oil chamber O2, and the fluid chamber F1 are provided as closed spaces isolated from an exterior space of the cylinder tube 108. Consequently, a fluid (oil or gas) inside the cylinder tube 108 cannot flow out of the cylinder tube 108. In this way, since the rear suspension 26 does not include a reservoir tank (also referred to as a sub-tank) which is individual from the hydraulic damper 103, the rear suspension 26 can be made small in size and light in weight.

As illustrated in FIG 12, the upper mount bracket 101 is attached to the body frame 2 by way of the upper damper unit Du. The bolt Bu (refer to FIG 11), with which the upper mount bracket 101 is attached to the body frame 2, is inserted into an upper bolt insertion hole Hu extending through the upper mount bracket 101 in the vehicle width direction. The upper damper unit Du is inserted in the upper bolt insertion hole Hu and is held onto the upper mount bracket 101. The upper damper unit Du may be held onto the body frame 2. The upper mount bracket 101 can turn with respect to the body frame 2 about a center line of the upper bolt insertion hole Hu extending in the vehicle width direction.

The lower mount bracket 102 is attached to the rear arm 25 by way of the lower damper unit DL. The bolt BL (refer to FIG 11), with which the lower mount bracket 102 is attached to the rear arm 25, is inserted into a lower bolt insertion hole HL extending through the lower mount bracket 102 in the vehicle width direction. The lower damper unit DL is held inside a holding hole Hr (refer to FIG 9) provided in the rear arm 25. The lower damper unit DL may be held onto the lower mount bracket 102. The lower mount bracket 102 can turn with respect to the rear arm 25 about a center line of the lower bolt insertion hole Hu extending in the vehicle width direction.

As illustrated in FIG 10, the upper mount bracket 101 is disposed above the lower mount bracket 102 when viewed from the left-right direction of the body frame 2. The upper mount bracket 101 is disposed ahead of the lower mount bracket 102 when viewed from the left-right direction of the body frame 2. The upper mount bracket 101 and the lower mount bracket 102 are disposed behind the rotation axis Ac of the crankshaft 55 when viewed from the left-right direction of the body frame 2. The upper mount bracket 101 is disposed above the rotation axis Ac of the crankshaft 55 when viewed from the left-right direction of the body frame 2. At least a portion of the lower mount bracket 102 is disposed below the rotation axis Ac of the crankshaft 55 when viewed from the left-right direction of the body frame 2. The upper mount bracket 101 and the lower mount bracket 102 are disposed behind the front pivot axis Ap1 and the rear pivot axis Ap2 when viewed from the left-right direction of the body frame 2. The upper mount bracket 101 and the lower mount bracket 102 are disposed above the front pivot axis Ap1 and the rear pivot axis Ap2 when viewed from the left-right direction of the body frame 2.

The upper mount bracket 101 is disposed above the front end Rf of the rear wheel Rw when viewed from the left-right direction of the body frame 2. The upper mount bracket 101 is disposed ahead of the front end Rf of the rear wheel Rw when viewed from the left-right direction of the body frame 2. The lower mount bracket 102 is disposed behind the front end Rf of the rear wheel Rw when viewed from the left-right direction of the body frame 2. The lower mount bracket 102 overlaps the rear wheel Rw when viewed from the left-right direction of the body frame 2. The upper mount bracket 101 is disposed above the CVT case 74 when viewed from the left-right direction of the body frame 2. The lower mount bracket 102 overlaps the CVT case 74 when viewed from the left-right direction of the body frame 2. The lower mount bracket 102 is disposed below an upper face 74s (refer to FIG 10) of the CVT case 74 when viewed from the left-right direction of the body frame 2.

The upper mount bracket 101 is disposed ahead of the rear end 2r of the body frame 2 when viewed from the left-right direction of the body frame 2. The lower mount bracket 102 is disposed behind the rear end 2r of the body frame 2 when viewed from the left-right direction of the body frame 2. The upper mount bracket 101 and the lower mount bracket 102 are disposed below the rear end 2r of the body frame 2 when viewed from the left-right direction of the body frame 2. The upper mount bracket 101 and the lower mount bracket 102 are disposed below the lower end 3L (refer to FIG 4) of the headpipe 3 when viewed from the left-right direction of the body frame 2.

As illustrated in FIG 10, the upper mount bracket 101 is disposed directly below the right rear stay 8 and overlaps the right rear stay 8 when viewed from the up-down direction of the body frame 2. Similarly, the suspension cover 107 is disposed directly below the right rear stay 8 and overlaps the right rear stay 8 when viewed from the up-down direction of the body frame 2. A rear end 73r of the crankcase 73 is disposed behind the upper mount bracket 101 when viewed from the up-down direction of the body frame 2. The lower mount bracket 102 is disposed in a position inner than the exhaust pipe 33 in the vehicle width direction when viewed from the up-down direction of the body frame 2.

As illustrated in FIG 10, the upper bolt insertion hole Hu is disposed above the lower bolt insertion hole HL when viewed from the left-right direction of the body frame 2. The upper bolt insertion hole Hu is disposed ahead of the lower bolt insertion hole HL when viewed from the left-right direction of the body frame 2. The upper bolt insertion hole Hu and the lower bolt insertion hole HL are disposed behind the rotation axis Ac of the crankshaft 55 when viewed from the left-right direction of the body frame 2. The upper bolt insertion hole Hu is disposed above the rotation axis Ac of the crankshaft 55 when viewed from the left-right direction of the body frame 2. The lower bolt insertion hole HL is disposed below the rotation axis Ac of the crankshaft 55 when viewed from the left-right direction of the body frame 2. The upper bolt insertion hole Hu and the lower bolt insertion hole HL are disposed behind the front pivot axis Ap1 and the rear pivot axis Ap2 when viewed from the left-right direction of the body frame 2. The upper bolt insertion hole Hu and the lower bolt insertion hole HL are disposed above the front pivot axis Ap 1 and the rear pivot axis Ap2 when viewed from the left-right direction of the body frame 2.

The upper bolt insertion hole Hu and the lower bolt insertion hole HL are disposed above the rotation center C1 of the rear wheel Rw. The upper bolt insertion hole Hu is disposed ahead of the front end Rf of the rear wheel Rw when viewed from the left-right direction of the body frame 2. The lower bolt insertion hole HL is disposed behind the front end Rf of the rear wheel Rw when viewed from the left-right direction of the body frame 2. The upper bolt insertion hole Hu is disposed ahead of the rear end 2r of the body frame 2 when viewed from the left-right direction of the body frame 2. The lower bolt insertion hole HL is disposed behind the rear end 2r of the body frame 2 when viewed from the left-right direction of the body frame 2. The upper bolt insertion hole Hu and the lower bolt insertion hole HL are disposed below the rear end 2r of the body frame 2 when viewed from the left-right direction of the body frame 2. The upper bolt insertion hole Hu and the lower bolt insertion hole HL are disposed below the lower end 3L (refer to FIG 4) of the headpipe 3 when viewed from the left-right direction of the body frame 2.

As illustrated in FIG 12, a center line of the hydraulic damper 103 corresponds to the telescopic axis Ls of the rear suspension 26. The telescopic axis Ls of the rear suspension 26 is inclined forwards. The telescopic axis Ls of the rear suspension 26 intersects the road surface Rs at an intersection point Pi. The intersection point Pi is situated behind the front end Rf of the rear wheel Rw and ahead of the rear end Rr of the rear wheel Rw when viewed from the left-right direction of the body frame 2.

As illustrated in FIG 10, an outer tire diameter R1 of the rear wheel Rw is defined as a distance between an intersection point Pf and an intersection point Pr in the front-rear direction of the body frame 2. The intersection point Pf is an intersection point between a vertical line that passes through the front end Rf of the rear wheel Rw and the horizontal road surface Rs when viewed from the left-right direction of the body frame 2. The intersection point Pr is an intersection point between a vertical line that passes through the rear end Rr of the rear wheel Rw and the horizontal road surface Rs when viewed from the left-right direction of the body frame 2.

The saddled vehicle 1 according to the embodiment of the invention is configured such that one of a plurality of types of tires having different outer tire diameters R1 can selectively attached to the swing unit 21 as the rear wheel Rw. FIG 14 illustrates external appearances of two saddled vehicles 1, viewed from the rear in the front-rear direction of the body frame 2, on which rear wheels Rw having different outer tire diameters R1 are attached.

A minimum value of an outer tire diameter R1 of a rear wheel Rw that is permitted to be attached on the swing unit 21 is determined based on an allowable bank angle θb that is required on the saddled vehicle 1. As is clear from FIG 14, as the outer tire diameter R1 becomes smaller, a component mounted on a side of a vehicle body becomes easier to contact the road surface Rs, and the allowable bank θb of the saddled vehicle 1 becomes smaller when the vehicle body is caused to tilt or lean sideways. For example, in the case that a greater allowable bank angle θb is required on a saddled vehicle 1 illustrated in a right area of FIG 14, a rear wheel Rw having a greater outer tire diameter R1 needs to be attached.

A maximum value of an outer tire diameter R1 of a rear wheel Rw that is permitted to be attached on the swing unit 21 is determined so as to prevent an outer circumferential face of the rear wheel Rw from contacting a vehicle body component that is situated at least either directly ahead of or directly behind the rear wheel Rw in the front-rear direction of the body frame 2 and a vehicle body component that is situated directly above the rear wheel Rw in the up-down direction of the body frame 2. For example, in the case of the example illustrated in FIG 5, an outer tire diameter R1 of the rear wheel Rw is determined so as to prevent the outer circumferential face of the rear wheel Rw from contacting the rear end of the crankcase 73.

As illustrated in FIG 10, the upper mount bracket 101 of the rear suspension 26 is disposed ahead of the front end Rf of the rear wheel Rw in the front-rear direction of the body frame 2 when viewed from the left-right direction of the body frame 2. This positional relationship is established irrespective of outer tire diameters R1 of rear wheels Rw that are permitted to be attached on the swing unit 21.

As is illustrated in FIG 10, when viewed from the left-right direction of the body frame 2, an intersection point Pc between the telescopic axis Ls of the rear suspension 26 and a straight line Lv extending through the front pivot axis Ap1 and the rear pivot axis Ap2 of the anti-vibration link 24 is situated behind the front end Rf of the rear wheel Rw in the front-rear direction of the body frame 2 and ahead of the rear end Rr of the rear wheel Rw in the front-rear direction of the body frame 2. This positional relationship is established irrespective of outer tire diameters R1 of rear wheels Rw that are permitted to be attached on the swing unit 21.

FIG 15 illustrates the saddled vehicle 1 on which a rear wheel Rw having an outer tire diameter R1' greater than that of the rear wheel Rw illustrated in FIG 10 is attached. This outer tire diameter R1' corresponds to the allowable maximum value of the outer tire diameter. FIG 16 illustrates the saddled vehicle 1 on which a rear wheel Rw having an outer tire diameter R1" smaller than that of the rear wheel Rw illustrated in FIG 10 is attached. It is understood that the positional relationship regarding the intersection point Pc described by reference to FIG 10 is established in either of the states.

The outer tire diameter of the rear wheel may be exemplified as one of design factors of the saddled vehicles that can be changed based on various demands from the market. For example, a smaller outer tire diameter can provide a smaller turning radius, whereas a greater outer tire diameter can improve the high-speed traveling performance. In general, in a saddled vehicle, dimensions of a body frame, a swing unit, an anti-vibration link, a rear suspension, and the like and positional relationships therebetween are designed based on an outer tire diameter of a rear wheel determined in advance so as to obtain a desired traveling performance. In other words, if only the outer tire diameter of the rear tire attached on the saddled vehicle so designed is changed, it could be difficult to cause the anti-vibration link and the rear suspension to exhibit the originally designed performances for obtaining the desired traveling performance. Consequently, there would be a case where the anti-vibration link and the rear suspension need to be replaced with those matching an outer tire diameter resulting from the change.

Specifically, the anti-vibration link absorbs a vibration component caused by the engine by pivoting around a pivot axis thereof to thereby prevent the transmission of the vibration component to the body frame. When the outer tire diameters of the rear wheels are changed as described above, there may occur a case where the anti-vibration link is restrained from pivoting due to the change in positional relationships between the components. In such a situation, a vibration component which shall originally be absorbed is transmitted to the pivot axis, thereby resulting in a possibility that a horizontal reaction force acts on the pivot axis. As a result, the vibration component transmitted to the body frame would affect the riding comfort of the saddled vehicle. In other words, the desired traveling performance would be deteriorated.

The inventor conceived to enable various types of rear wheels Rw having different outer tire diameters R1 to be attached on a common assembly including at least the body frame 2, the swing unit 21, the anti-vibration link 24, and the rear suspension 26 in order to meet various demands from the markets. Further, the inventor studied requirements of such a common assembly, on which a plurality of types of rear wheels Rw having different outer tire diameters R1 can be attached, capable of suppressing the deterioration of the traveling performance irrespective of the outer tire diameters R1.

An angle formed between the up-down direction of the body frame 2 and the straight line Lv extending through the front pivot axis Ap1 and the rear pivot axis Ap2 of the anti-vibration link 24 when viewed from the left-right direction of the body frame 2 affects the magnitude of an allowable propelling force with which the vibration isolating function of the anti-vibration link 24 can work normally against a propelling force of the rear wheel Rw that mainly acts on the anti-vibration link 24. On the other hand, an angle formed between the up-down direction of the body frame 2 and the telescopic axis Ls of the rear suspension 26 when viewed from the left-right direction of the body frame 2 affects the impact damping capability of the rear suspension 26 as well as the magnitude of a force directed along the up-down direction of the body frame 2 and acting on the rear wheel Rw thereby causing the anti-vibration link 24 to pivot about each of the front pivot axis Ap1 and the rear pivot axis Ap2. The inventor noted the fact that the above two angles greatly affect the traveling performance of the saddled vehicle 1 in particular. Further, the inventor found out the requirements of such a common assembly that is capable of suppressing the deterioration of the traveling performance while allowing the attachment of plural types of rear wheels Rw having different outer tire diameters R1 include determination of the above two angles in such a manner that the intersection point Pc between the straight line Lv and the telescopic axis Ls meets the positional conditions or relationships described above irrespective of the outer tire diameters R1 of the rear wheels Rw that are allowed to be attached on the common assembly.

Consequently, with the configuration that has been described heretofore, it is possible to provide the saddled vehicle 1 that can meet flexibly various demands from the markets without deteriorating the traveling performance thereof by changing the outer tire diameters R1 of the rear wheels Rw that are attached on the common assembly without changing the components attached thereon.

The inventor further studied about the requirements that are to be met by the common assembly capable of suppressing the deterioration of the traveling performance thereof while allowing the attachment of the plural types of rear wheels Rw having different outer tire diameters R1, and found out that it is preferable that the requirements include at least one of the following conditions (1) to (3).
(1) In a case where a rear wheel Rw having an outer tire diameter R1 of the allowable maximum value is attached on the swing unit 21, the intersection point Pc is situated above a ground contact point Pg of the rear wheel Rw or at the same height as the ground contact point Pg in the up-down direction of the body frame 2. This condition is established in the example illustrated in FIG 15.
(2) The front pivot axis Ap1 and the rear pivot axis Ap2 are situated ahead of the upper mount bracket 101 of the rear suspension 26 in the front-rear direction of the body frame 2 when viewed from the left-right direction of the body frame 2. This condition is established in the examples illustrated in FIGS. 10, 15, and 16.
(3) The angle θ formed by the telescopic axis Ls of the rear suspension 26 and the straight line Lv connecting the front pivot axis Ap1 with the rear pivot axis Ap2 is no less than 20 degrees when viewed from the left-right direction of the body frame 2. This condition is established in the examples illustrated in FIGS. 10, 15, and 16.
   The inventor further studied about the requirements that are to be met by the common assembly capable of suppressing the deterioration of the traveling performance thereof while allowing the attachment of the plural types of rear wheels Rw having different outer tire diameters R1, and found out that it is preferable that the requirements include at least one of the following conditions (4) to (7). These conditions are all established in an example illustrated in FIG 17.
(4) When viewed from the left-right direction of the body frame 2, a length of a straight line L1 connecting a center line of the upper bolt insertion hole Hu in the upper mount bracket 101 and a center line of the lower bolt insertion hole HL in the lower mount bracket 102 is shorter than a length of a straight line L2 connecting the front pivot axis Ap1 and the center line of the upper bolt insertion hole Hu as well as a length of a straight line L3 connecting the front pivot axis Ap1 and the center line of the lower bolt insertion hole HL.
(5) When viewed from the left-right direction of the body frame 2, the length of the straight line L1 connecting the center line of the upper bolt insertion hole Hu in the upper mount bracket 101 and the center line of the lower bolt insertion hole HL in the lower mount bracket 102 is shorter than a length of a straight line L4 connecting the rear pivot axis Ap2 and the center line of the upper bolt insertion hole Hu as well as a length of a straight line L5 connecting the rear pivot axis Ap2 and the center line of the lower bolt insertion hole HL.
(6) The lower mount bracket 102 is disposed above the rotation center C1 of the rear wheel Rw in the up-down direction of the body frame 2 when viewed from the left-right direction of the body frame 2.
(7) The upper mount bracket 101 is disposed behind the rear pivot axis Ap2 in the front-rear direction of the body frame 2 when viewed from the left-right direction of the body frame 2.

As illustrated in FIG 10, when viewed from the left-right direction of the body frame 2, the intersection point Pi between the telescopic axis Ls of the rear suspension 26 and the road surface Rs is situated ahead of the intersection point Pr in the front-rear direction of the body frame 2 and behind the intersection point Pf in the front-rear direction of the body frame 2. In other words, the position and inclination angle of the rear suspension 26 are determined in such a manner that the intersection point Pi is situated ahead of the intersection point Pr in the front-rear direction of the body frame 2 and behind the intersection point Pf in the front-rear direction of the body frame 2 when viewed from the left-right direction of the body frame 2. As a result, the vibrations of the rear wheel Rw and the swing unit 21 can effectively be reduced by the anti-vibration link 24 and the rear suspension 26 without provision of a balancer on the engine 22.

The embodiment that has been described heretofore is intended to facilitate the understanding of this disclosure and is hence not intended to limit the contents of the disclosure. The embodiment that has been described heretofore can be modified or improved without departing from the scope of the present disclosure, as defined by the appended claims.

For example, the seat 11 may be attached to the body frame 2 by way of a member other than the stowage box 12. Alternatively, the seat 11 need not be attached to the body frame 2 by way of an intermediate member such as the stowage box 12 but may be attached directly to the body frame 2.

The saddled vehicle 1 may further include a luggage rack or a carrier box that is disposed directly above the rear wheel Rw. In this case, the luggage rack or the carrier box may be attached to the body frame 2 by way of an intermediate member such as the stowage box 12 or may be attached directly to the body frame 2.

At least a portion of the upper mount bracket 101 of the rear suspension 26 may be disposed above the lower end 3L of the headpipe 3 when viewed from the left-right direction of the body frame 2. At least a portion of the upper mount bracket 101 of the rear suspension 26 may be disposed behind the rear end 73r of the crankcase 73. 26 may be disposed behind the rear end 73r of the crankcase 73.

At least a portion of the lower mount bracket 102 of the rear suspension 26 may be disposed behind the axle shaft 72 when viewed from the left-right direction of the body frame 2. At least a portion of the lower mount bracket 102 of the rear suspension 26 may be disposed ahead of the front end Rf of the rear wheel Rw when viewed from the left-right direction of the body frame 2.

The whole of the lower mount bracket 102 of the rear suspension 26 may be disposed above the rotation axis Ac of the crankshaft 55 when viewed from the left-right direction of the body frame 2. At least a portion of the lower mount bracket 102 of the rear suspension 26 may be disposed above the upper face 74s of the CVT case 74 when viewed from the left-right direction of the body frame 2.

The rear suspension 26 may not overlap the rear wheel Rw when viewed from the left-right direction of the body frame 2. That is, the whole of the rear suspension 26 may be disposed ahead of the front end Rf of the rear wheel Rw when viewed from the left-right direction of the body frame 2.

The rear end 2r of the body frame 2 may be disposed behind the rotation center C1 of the rear wheel Rw. The rear end 2r of the body frame 2 may be disposed above the lower end 3L of the headpipe 3.

The saddled vehicle 1 may be a motor cycle other than the scooter as long as the swing unit 21 is provided. In addition, the saddled vehicle 1 may be a vehicle including three or more wheels or such a vehicle for use on rough ground (all-terrain vehicle).

## Claims

1. A saddled vehicle, comprising:
a body frame (2);
a rear wheel (Rw);
a swing unit (21) supporting an engine (22) configured to generate power for rotating the rear wheel (Rw), a transmission mechanism (23) configured to transmit the power to the rear wheel (Rw), and the rear wheel (Rw);
an anti-vibration link (24) coupled to the body frame (2) so as to be pivotable about a first pivot axis (Ap1), and coupled to the swing unit (21) so as to be pivotable about a second pivot axis (Ap2), thereby enabling the swing unit (21) to swing in an up-down direction of the body frame (2); and
a rear suspension (26) including an upper coupling portion (101) coupled to the body frame (2), a lower coupling portion (102) coupled to the swing unit (21), and a hydraulic damper (103) configured to exhibit a telescopic action along a telescopic axis (Ls) to enable damping of a displacement of the rear wheel (Rw) in the up-down direction of the body frame (2),
wherein the transmission mechanism (23) is disposed in one side of the rear wheel (Rw) in a left-right direction of the body frame (2), and the rear suspension (26) is disposed in the other side of the rear wheel (Rw) in the left-right direction of the body frame (2);
wherein the saddled vehicle is configured so that one of plural types of tires having different outer tire diameters can be selectively attached to the swing unit (21) as the rear wheel (Rw);
wherein the upper coupling portion (101) of the rear suspension (26) is disposed ahead of a front end (Rf) of the rear wheel (Rw) in a front-rear direction of the body frame (2) when viewed from the left-right direction of the body frame (2), irrespective of an outer tire diameter (R1) of the rear wheel (Rw) allowed to be attached to the swing unit (21); and
wherein when viewed from the left-right direction of the body frame (2), an intersecting point (Pc) between the telescopic axis (Ls) of the rear suspension (26) and a straight line (Lv) extending through the first pivot axis (Ap1) and the second pivot axis (Ap2) of the anti-vibration link (24) is situated behind the front end (Rf) of the rear wheel (Rw) in the front-rear direction of the body frame (2) and ahead of a rear end (Rr) of the rear wheel (Rw) in the front-rear direction of the body frame (2), irrespective of the outer tire diameter (R1) of the rear wheel (Rw) allowed to be attached to the swing unit (21), **characterized in that** the telescopic axis (Ls) of the rear suspension (26) is inclined forwards and the telescopic axis (Ls) of the rear suspension (26) intersects a road surface (Rs) at an intersection point (Pi), the intersection point (Pi) is situated behind the front end (Rf) of the rear wheel (Rw) and ahead of the rear end (Rr) of the rear wheel (Rw) when viewed from the left-right direction of the body frame (2), and an outer tire diameter (R1) of the rear wheel (Rw) is defined as a distance between an intersection point (Pf) and an intersection point (Pr) in the front-rear direction of the body frame (2), and the intersection point (Pf) is an intersection point between a vertical line that passes through the front end (Rf) of the rear wheel (Rw) and the horizontal road surface (Rs) when viewed from the left-right direction of the body frame (2), the intersection point (Pr) is an intersection point between a vertical line that passes through the rear end (Rr) of the rear wheel (Rw) and the horizontal road surface (Rs) when viewed from the left-right direction of the body frame (2).

2. The saddled vehicle according to claim 1, wherein in a case where a rear wheel (Rw) having an outer tire diameter (R1) of the allowable maximum value is attached to the swing unit (21), the intersecting point (Pc) between the telescopic axis (Ls) of the rear suspension (26) and the straight line (Lv) extending through the first pivot axis (Ap1) and the second pivot axis (Ap2) of the anti-vibration link (24) is situated above a ground contact point (Pg) of the rear wheel (Rw) in the up-down direction of the body frame (2) or at a height as same as the ground contact point (Pg).

3. The saddled vehicle according to claim 1 or 2, wherein the first pivot axis (Ap1) and the second pivot axis (Ap2) are situated ahead of the upper coupling portion (101) of the rear suspension (26) in the front-rear direction of the body frame (2), when viewed from the left-right direction of the body frame (2).

4. The saddled vehicle according to any one of claims 1 to 3, wherein an angle (θ) formed by the telescopic axis (Ls) of the rear suspension (26) and the straight line (Lv) connecting the first pivot axis (Ap1) and the second pivot axis (Ap2) is no less than 20 degrees, when viewed from the left-right direction of the body frame (2).

5. The saddled vehicle according to any one of claims 1 to 4, wherein when viewed from the left-right direction of the body frame (2), a length of a straight line (L1) connecting the upper coupling portion (101) and the lower coupling portion (102) is shorter than a length of a straight line (L2) connecting the first pivot axis (Ap1) and the upper coupling portion (101) as well as a length of a straight line (L3) connecting the first pivot axis (Ap1) and the lower coupling portion (102).

6. The saddled vehicle according to any one of claims 1 to 5, wherein when viewed from the left-right direction of the body frame (2), a length of a straight line (L1) connecting the upper coupling portion (101) and the lower coupling portion (102) is shorter than a length of a straight line (L4) connecting the second pivot axis (Ap2) and the upper coupling portion (101) as well as a length of a straight line (L5) connecting the second pivot axis (Ap2) and the lower coupling portion (102).

7. The saddled vehicle according to any one of claims 1 to 6, wherein the lower coupling portion (102) is disposed above a rotation center (C1) of the rear wheel (Rw) in the up-down direction of the body frame (2), when viewed from the left-right direction of the body frame (2).

8. The saddled vehicle according to any one of claims 1 to 7, wherein the upper coupling portion (101) is disposed behind the second pivot axis (Ap2) in the front-rear direction of the body frame (2), when viewed from the left-right direction of the body frame (2).

## Patentansprüche

1. Ein Sattel-Fahrzeug, das umfasst:
einen Körperrahmen (2);
ein Hinterrad (Rw);
eine Schwingeinheit (21), die einen Motor (22), der konfiguriert ist, um Leistung zum Drehen des Hinterrads (Rw) zu erzeugen, einen Übertragungsmechanismus (23), der konfiguriert ist, um die Leistung auf das Hinterrad (Rw) zu übertragen, und das Hinterrad (Rw) lagert;
eine Antivibrationsverbindung (24), die mit dem Körperrahmen (2) gekoppelt ist, so dass sie um eine erste Schwenkachse (Ap1) schwenkbar ist, und die mit der Schwingeinheit (21) gekoppelt ist, so dass sie um eine zweite Schwenkachse (Ap2) schwenkbar ist, wodurch die Schwingeinheit (21) in einer Auf-Ab-Richtung des Körperrahmens (2) schwingen kann; und
eine hintere Aufhängung (26), die einen oberen Kupplungsabschnitt (101), der mit dem Körperrahmen (2) gekoppelt ist, einen unteren Kupplungsabschnitt (102), der mit der Schwingeinheit (21) gekoppelt ist, und einen hydraulischen Dämpfer (103), der konfiguriert ist, um eine Teleskopwirkung entlang einer Teleskopachse (Ls) zu zeigen, um eine Dämpfung einer Verschiebung des Hinterrads (Rw) in der Auf-Ab-Richtung des Körperrahmens (2) zu ermöglichen, enthält
wobei der Übertragungsmechanismus (23) auf einer Seite des Hinterrades (Rw) in einer Links-Rechts-Richtung des Körperrahmens (2) angeordnet ist und die hintere Aufhängung (26) auf der anderen Seite des Hinterrades (Rw) in der Links-Rechts-Richtung des Körperrahmens (2) angeordnet ist;
wobei das Sattel-Fahrzeug konfiguriert ist, so dass einer von mehreren Reifentypen mit unterschiedlichen Reifenaußendurchmessern selektiv an der Schwingeinheit (21) als Hinterrad (Rw) angebracht werden kann;
wobei der obere Kupplungsabschnitt (101) der hinteren Aufhängung (26) vor einem vorderen Ende (Rf) des Hinterrads (Rw) in einer Vorwärts-Rückwärts-Richtung des Körperrahmens (2) angeordnet ist, wenn er von der Links-Rechts-Richtung des Körperrahmens (2) aus betrachtet wird, unabhängig von einem Reifenaußendurchmesser (R1) des Hinterrads (Rw), der an der Schwingeinheit (21) angebracht werden darf; und
wobei, wenn von der Links-Rechts-Richtung des Körperrahmens (2) aus gesehen, ein Schnittpunkt (Pc) zwischen der Teleskopachse (Ls) der hinteren Aufhängung (26) und einer Geraden (Lv), die durch die erste Schwenkachse (Ap1) und die zweite Schwenkachse (Ap2) der Antivibrationsverbindung (24) verlauft, hinter dem vorderen Ende (Rf) des Hinterrades (Rw) in Vorder-Hinter-Richtung des Körperrahmens (2) und vor einem hinteren Ende (Rr) des Hinterrades (Rw) in Vorder-Hinter-Richtung des Körperrahmens (2) liegt, unabhängig vom Reifenaußendurchmesser (R1) des Hinterrades (Rw), das an der Schwingeinheit (21) angebracht werden darf, **dadurch gekennzeichnet, dass** die Teleskopachse (Ls) der hinteren Aufhängung (26) nach vorne geneigt ist und die Teleskopachse (Ls) der hinteren Aufhängung (26) eine Straßenoberfläche (Rs) in einem Schnittpunkt (Pi) schneidet, der Schnittpunkt (Pi) hinter dem vorderen Ende (Rf) des Hinterrads (Rw) und vor dem hinteren Ende (Rr) des Hinterrads (Rw) liegt, wenn man es von der Links-Rechts-Richtung des Körperrahmens (2) aus betrachtet, und ein Reifenaußendurchmesser (R1) des Hinterrads (Rw) als ein Abstand zwischen einem Schnittpunkt (Pf) und einem Schnittpunkt (Pr) in der Vorder-Hinter-Richtung des Körperrahmens (2) definiert ist und der Schnittpunkt (Pf) ein Schnittpunkt zwischen einer vertikalen Linie ist, die durch das vordere Ende (Rf) des Hinterrads (Rw) und die horizontale Fahrbahnoberfläche (Rs) verläuft, wenn von der Links-Rechts-Richtung des Körperrahmens (2) aus gesehen, der Schnittpunkt (Pr) ein Schnittpunkt zwischen einer vertikalen Linie ist, die durch das hintere Ende (Rr) des Hinterrads (Rw) und die horizontale Fahrbahnoberfläche (Rs) verläuft, wenn von der Links-Rechts-Richtung des Körperrahmens (2) aus gesehen.

2. Das Sattel-Fahrzeug gemäß Anspruch 1, wobei in einem Fall, in dem ein Hinterrad (Rw), das einen Reifenaußendurchmessers (R1) mit zulässigen maximalen Wert hat, an der Schwingeinheit (21) angebracht ist, liegt der Schnittpunkt (Pc) zwischen der Teleskopachse (Ls) der hinteren Aufhängung (26) und der Geraden (Lv), die sich durch die erste Drehachse (Ap1) und die zweite Drehachse (Ap2) der Antivibrationsverbindung (24) erstreckt, oberhalb eines Bodenkontaktpunktes (Pg) des Hinterrades (Rw) in der Auf-Ab-Richtung des Körperrahmens (2) oder auf einer Höhe gleich dem Bodenkontaktpunkt (Pg).

3. Das Sattel-Fahrzeug gemäß Anspruch 1 oder 2, wobei die erste Schwenkachse (Ap1) und die zweite Schwenkachse (Ap2) in Vorder-Hinter-Richtung des Körperrahmens (2), von der Links-Rechts-Richtung des Körperrahmens (2) aus gesehen, vor dem oberen Kupplungsabschnitt (101) der hinteren Aufhängung (26) liegen.

4. Das Sattel-Fahrzeug gemäß irgendeinem der Ansprüche 1 bis 3, wobei ein Winkel (θ), der von der Teleskopachse (Ls) der hinteren Aufhängung (26) und der Geraden (Lv), die die erste Schwenkachse (Ap1) und die zweite Schwenkachse (Ap2) verbindet, gebildet wird, von der Links-Rechts-Richtung des Körperrahmens (2) aus gesehen nicht weniger als 20 Grad beträgt.

5. Das Sattel-Fahrzeug gemäß irgendeinem der Ansprüche 1 bis 4, wobei in Links-Rechts-Richtung des Körperrahmens (2) gesehen eine Länge einer Geraden (L1) zwischen dem oberen Kupplungsabschnitt (101) und dem unteren Kupplungsabschnitt (102) kürzer ist als eine Länge einer Geraden (L2) zwischen der ersten Schwenkachse (Ap1) und dem oberen Kupplungsabschnitt (101) sowie eine Länge einer Geraden (L3) zwischen der ersten Schwenkachse (Ap1) und dem unteren Kupplungsabschnitt (102).

6. Das Sattel-Fahrzeug gemäß irgendeinem der Ansprüche 1 bis 5, wobei, von der Links-Rechts-Richtung des Körperrahmens (2) aus gesehen, eine Länge einer Geraden (L1), die den oberen Kupplungsabschnitt (101) und den unteren Kupplungsabschnitt (102) verbindet, kürzer ist als eine Länge einer Geraden (L4), welche die zweite Schwenkachse (Ap2) und den oberen Kupplungsabschnitt (101) verbindet, sowie eine Länge einer Geraden (L5), welche die zweite Schwenkachse (Ap2) und den unteren Kupplungsabschnitt (102) verbindet.

7. Das Sattel-Fahrzeug gemäß irgendeinem der Ansprüche 1 bis 6, wobei der untere Kupplungsabschnitt (102) oberhalb eines Rotationszentrums (C1) des Hinterrads (Rw) in der Auf-Ab-Richtung des Körperrahmens (2) angeordnet ist, wenn man von der Links-Rechts-Richtung des Körperrahmens (2) gesehen.

8. Das Sattel-Fahrzeug gemäß irgendeinem der Ansprüche 1 bis 7, wobei der obere Kupplungsabschnitt (101) in Vorder-Hinter-Richtung des Körperrahmens (2), von der Links-Rechts-Richtung des Körperrahmens (2) aus gesehen, hinter der zweiten Schwenkachse (Ap2) angeordnet ist.

## Revendications

1. Véhicule à selle, comprenant :
une cadre de carrosserie (2) ;
une roue arrière (Rw) ;
une unité oscillante (21) supportant un moteur (22) configuré pour générer de la puissance pour faire tourner la roue arrière (Rw), un mécanisme de transmission (23) configuré pour transmettre la puissance à la roue arrière (Rw), et la roue arrière (Rw) ;
une liaison anti-vibration (24) couplée au cadre de carrosserie (2) de manière à pouvoir pivoter autour d'un premier axe de pivotement (Ap1), et couplée à l'unité oscillante (21) de manière à pouvoir pivoter autour d'un deuxième axe de pivotement (Ap2), permettant ainsi à l'unité oscillante (21) d'osciller dans une direction haut-bas du cadre de carrosserie (2) ; et
une suspension arrière (26) comprenant une partie d'accouplement supérieure (101) couplée au cadre de carrosserie (2), une partie d'accouplement inférieure (102) couplée à l'unité oscillante (21), et un amortisseur hydraulique (103) configuré pour présenter un action télescopique le long d'un axe télescopique (Ls) pour permettre l'amortissement d'un déplacement de la roue arrière (Rw) dans la direction haut-bas du cadre de carrosserie (2),
dans lequel le mécanisme de transmission (23) est disposé d'un côté de la roue arrière (Rw) dans une direction gauche-droite du cadre de carrosserie (2), et la suspension arrière (26) est disposée de l'autre côté de la roue arrière (Rw) dans la direction gauche-droite du cadre de carrosserie (2) ;
dans lequel le véhicule à selle est configuré de sorte que l'un de plusieurs types de pneus ayant des diamètres de pneu extérieurs différents puisse être sélectivement fixé à l'unité oscillante (21) comme étant la roue arrière (Rw) ;
dans lequel la partie d'accouplement supérieure (101) de la suspension arrière (26) est disposée devant une extrémité avant (Rf) de la roue arrière (Rw) dans une direction avant-arrière du cadre de carrosserie (2) lorsque l'on regarde depuis la direction gauche-droite du cadre de carrosserie (2), indépendamment d'un diamètre de pneu extérieur (R1) de la roue arrière (Rw) autorisée à être fixée à l'unité oscillante (21) ; et
dans lequel, lorsque l'on regarde depuis la direction gauche-droite du cadre de carrosserie (2), un point d'intersection (Pc) entre l'axe télescopique (Ls) de la suspension arrière (26) et une ligne droite (Lv) s'étendant à travers le premier axe de pivotement (Ap1) et le deuxième axe de pivotement (Ap2) de la liaison anti-vibration (24) est situé derrière l'extrémité avant (Rf) de la roue arrière (Rw) dans la direction avant-arrière du cadre de carrosserie (2) et devant une extrémité arrière (Rr) de la roue arrière (Rw) dans la direction avant-arrière du cadre de carrosserie (2), indépendamment du diamètre de pneu extérieur (R1) de la roue arrière (Rw) autorisée à être fixée à l'unité oscillante (21),
**caractérisé en ce que**
l'axe télescopique (Ls) de la suspension arrière (26) est incliné vers l'avant et l'axe télescopique (Ls) de la suspension arrière (26) coupe une surface de route (Rs) en un point d'intersection (Pi), le point d'intersection (Pi) est situé derrière l'extrémité avant (Rf) de la roue arrière (Rw) et devant l'extrémité arrière (Rr) de la roue arrière (Rw) lorsque l'on regarde depuis la direction gauche-droite du cadre de carrosserie (2), et un diamètre de pneu extérieur (R1) de la roue arrière (Rw) est défini comme une distance entre un point d'intersection (Pf) et un point d'intersection (Pr) dans la direction avant-arrière du cadre de carrosserie (2), et le point d'intersection (Pf) est un point d'intersection entre une ligne verticale qui passe par l'extrémité avant (Rf) de la roue arrière (Rw) et la surface de route horizontale (Rs) lorsque l'on regarde depuis la direction gauche-droite du cadre de carrosserie (2), le point d'intersection (Pr) est un point d'intersection entre une ligne verticale qui passe par l'extrémité arrière (Rr) de la roue arrière (Rw) et la surface de route horizontale (Rs) lorsque l'on regarde depuis la direction gauche-droite du cadre de carrosserie (2).

2. Véhicule à selle selon la revendication 1, dans lequel, dans un cas où une roue arrière (Rw) ayant un diamètre de pneu extérieur (R1) de la valeur maximale admissible est fixée à l'unité oscillante (21),
le point d'intersection (Pc) entre l'axe télescopique (Ls) de la suspension arrière (26) et la ligne droite (Lv) s'étendant à travers le premier axe de pivotement (Ap1) et le deuxième axe de pivotement (Ap2) de la liaison anti-vibration (24) est situé au-dessus d'un point de contact au sol (Pg) de la roue arrière (Rw) dans la direction haut-bas du cadre de carrosserie (2) ou à une hauteur identique à celle du point de contact au sol (Pg).

3. Véhicule à selle selon la revendication 1 ou 2, dans lequel le premier axe de pivotement (Ap1) et le deuxième axe de pivotement (Ap2) sont situés devant la partie d'accouplement supérieure (101) de la suspension arrière (26) dans la direction avant-arrière du cadre de carrosserie (2), lorsque l'on regarde depuis la direction gauche-droite du cadre de carrosserie (2).

4. Véhicule à selle selon l'une quelconque des revendications 1 à 3, dans lequel un angle (θ) formé par l'axe télescopique (Ls) de la suspension arrière (26) et la ligne droite (Lv) reliant le premier axe de pivotement (Ap1) et le deuxième axe de pivotement (Ap2) n'est pas inférieur 20 à degrés, lorsque l'on regarde depuis la direction gauche-droite du cadre de carrosserie (2).

5. Véhicule à selle selon l'une quelconque des revendications 1 à 4, dans lequel, lorsque l'on regarde depuis la direction gauche-droite du cadre de carrosserie (2), une longueur d'une ligne droite (L1) reliant la partie d'accouplement supérieure (101) et la partie d'accouplement inférieure (102) est plus courte qu'une longueur d'une ligne droite (L2) reliant le premier axe de pivotement (Ap1) et la partie d'accouplement supérieure (101) ainsi qu'une longueur d'une ligne droite (L3) reliant le premier axe de pivotement (Ap1) et la partie d'accouplement inférieure (102).

6. Véhicule à selle selon l'une quelconque des revendications 1 à 5, dans lequel, lorsque l'on regarde depuis la direction gauche-droite du cadre de carrosserie (2), une longueur d'une ligne droite (L1) reliant la partie d'accouplement supérieure (101) et la partie d'accouplement inférieure (102) est plus courte qu'une longueur d'une ligne droite (L4) reliant le deuxième axe de pivotement (Ap2) et la partie d'accouplement supérieure (101) ainsi qu'une longueur d'une ligne droite (L5) reliant le deuxième axe de pivotement (Ap2) et la partie d'accouplement inférieure (102).

7. Véhicule à selle selon l'une quelconque des revendications 1 à 6, dans lequel la partie d'accouplement inférieure (102) est disposée au-dessus d'un centre de rotation (C1) de la roue arrière (Rw) dans la direction haut-bas du cadre de carrosserie (2), lorsque l'on regarde depuis la direction gauche-droite du cadre de carrosserie (2).

8. Véhicule à selle selon l'une quelconque des revendications 1 à 7, dans lequel la partie d'accouplement supérieure (101) est disposée derrière le deuxième axe de pivotement (Ap2) dans la direction avant-arrière du cadre de carrosserie (2), lorsque l'on regarde depuis la direction gauche-droite du cadre de carrosserie (2).
